# EUROPEAN PATENT APPLICATION

(11) **EP 2 889 835 A1**
(43) Date of publication of application: **01.07.2015**
(21) Application number: 13831171.7
(22) Date of filing: 20.05.2013
(51) Int. Cl.: G06T 7/00

(54) **OBJECT DISCRIMINATION DEVICE, OBJECT DISCRIMINATION METHOD, AND PROGRAM**

(30) Priority: 23.08.2012 JP 2012184536
(71) Applicant: NEC Corporation, Tokyo 108-8001 (JP)
(72) Inventor: MASE, Ryota, Tokyo 108-8001 (JP)
(74) Representative: Vossius & Partner Patentanwälte Rechtsanwälte mbB
(86) International application number: PCT/JP2013/063982
(87) International publication number: WO 2014/030399

(57) **Abstract**

An image showing a same object as an object shown in another image is identified more accurately. A difference area in an input image is determined by converting a difference area in a reference image, based on geometric transformation information calculated by an analysis using a local descriptor. Meanwhile, the input image is divided and a divided area descriptor is extracted from each divided area. A descriptor obtained by converting a divided area descriptor in a difference area in the input image and a descriptor in a difference area in the reference image are matched with each other.

## Description

### BACKGROUND

The present invention relates to an apparatus and a method, and moreover a program for accurately identifying an object in an image.

To enable robust identification of a subject in an image with respect to variations in photographed size and angle and to occlusion, systems are proposed which detect a large number of characteristic points (feature points) in the image and which extract a descriptor of a local area (a local descriptor) around each feature point. As representative systems thereof, Patent Document 1 and Non-Patent Document 1 disclose local descriptor extraction apparatuses that use a SIFT (Scale Invariant Feature Transform) descriptor.

Conventionally, with a local descriptor extraction apparatus, information related to brightness is first exclusively extracted from each pixel in an image, a large number of characteristic points (feature points) are detected from the extracted brightness information, and feature point information that is information related to each feature point is outputted. In this case, feature point information indicates, for example, a coordinate position or a scale of a detected local feature point or an orientation of a feature point. Subsequently, a local area from which descriptor extraction is to be performed is acquired from the feature point information that is a coordinate position, a scale, an orientation, or the like of each detected feature point to generate (describe) a local descriptor.

For example, as described in Non-Patent Document 1, in order to identify an image showing a same subject as a subject in a photographed image, a local descriptor 1 extracted from the photographed image or, in other words, an input image is compared with a local descriptor 2 generated from a reference image. Specifically, distance calculations on a feature space are performed on all combinations of respective descriptors of a plurality of feature points constituting the local descriptor 1 and respective descriptors of a plurality of feature points constituting the local descriptor 2. A nearest descriptor is determined as a corresponding descriptor. The corresponding descriptor is determined so as to also correspond to a feature point that is a source of descriptor generation. Subsequently, regarding a combination of feature points determined to be corresponding feature points, whether the corresponding feature points are correct or erroneous is determined based on whether or not coordinate positions resulting from moving coordinate positions of the feature points in the input image in accordance with a specific geometric transformation are consistent with coordinate positions of the feature points in the reference image. When the number of feature points determined to be correctly corresponding feature points is equal to or larger than a prescribed value, it is determined that a same subject is shown (in other words, the subject in the input image and the subject in the reference image are consistent with each other).
Patent Document 1: US Patent Specification No. 6711293
Patent Document 2: Patent Publication JP-A-2010-79545
Non-Patent Document 1: David G. Lowe, "Distinctive image features from scale-invariant keypoints", USA, International Journal of Computer Vision, 60 (2), 2004, pages. 91-110

Conventional object identification systems that utilize local descriptors identify an object based on a correspondence relationship between a local descriptor extracted from brightness information of an input image and a local descriptor extracted from brightness information of a reference image. With such an identification method, when an object shown in the input image and an object shown in the reference image differ from each other but the difference between the two objects is minute, there is a problem that the images are erroneously identified to show a same object due to the existence of a large number of corresponding feature points.

### SUMMARY

The present invention has been made in consideration of the problem described above and an object thereof is to provide a technique for more accurately identifying an image showing a same object as an object shown in another image.

An object identification apparatus according to the present invention includes: a local descriptor matching unit for determining whether or not respective descriptors of feature points extracted from an input image and respective descriptors of feature points extracted from a reference image correctly correspond to each other; an input image divided area descriptor extracting unit for extracting a descriptor from each divided area obtained by dividing the input image; an input image divided area descriptor converting unit for acquiring a descriptor of the divided area included in an area in the input image corresponding to a position of an image area obtained by performing a geometric transformation for correcting a geometric deviation between the input image and the reference image on a prescribed area of the reference image when a score based on the number of combinations of descriptors determined to correspond correctly by the local descriptor matching unit is equal to or larger than a prescribed value; and a descriptor matching unit for matching a descriptor acquired by the input image divided area descriptor converting unit with a descriptor extracted from the prescribed area of the reference image, and for outputting a matching result.

An object identification method according to the present invention includes the steps of: determining whether or not respective descriptors of feature points extracted from an input image and respective descriptors of feature points extracted from a reference image correctly correspond to each other; extracting a descriptor from each divided area obtained by dividing the input image; acquiring a descriptor of the divided area included in an area in the input image corresponding to a position of an image area obtained by performing a geometric transformation for correcting a geometric deviation between the input image and the reference image on a prescribed area of the reference image when a score based on the number of combinations of descriptors determined to correspond correctly in the determining step is equal to or larger than a prescribed value; and matching a descriptor acquired in the acquiring step with a descriptor extracted from the prescribed area of the reference image and outputting a matching result.

A program according to the present invention causes a computer to function as: a local descriptor matching unit for determining whether or not respective descriptors of feature points extracted from an input image and respective descriptors of feature points extracted from a reference image correctly correspond to each other; an input image divided area descriptor extracting unit for extracting a descriptor from each divided area obtained by dividing the input image; an input image divided area descriptor converting unit for acquiring a descriptor of the divided area included in an area in the input image corresponding to a position of an image area obtained by performing a geometric transformation for correcting a geometric deviation between the input image and the reference image on a prescribed area of the reference image when a score based on the number of combinations of descriptors determined to correspond correctly by the local descriptor matching unit is equal to or larger than a prescribed value; and a descriptor matching unit for matching a descriptor acquired by the input image difference area descriptor converting unit with a descriptor extracted from the prescribed area of the reference image, and for outputting a matching result.

According to the present invention, a technique for more accurately identifying an image showing a same object as an object shown in another image can be provided.

### DESCRIPTION OF DRAWINGS

FIG. 1 is a block diagram representing a configuration example of an object identification apparatus according to a first embodiment;
FIG. 2 is a flow chart showing an operation example of an input image difference area determining unit 14;
FIG. 3 is a block diagram representing a configuration example of a local descriptor extracting unit 11;
FIG. 4 is a block diagram representing a configuration example of a local descriptor matching unit 12;
FIG. 5 is a block diagram representing a configuration example of an input image divided area descriptor extracting unit 13;
FIG. 6 is a diagram showing an example of a divided area generation pattern;
FIG. 7 is a block diagram representing a configuration example of an input image divided area descriptor converting unit 15;
FIG. 8 is a block diagram representing a configuration example of a descriptor matching unit 16;
FIG. 9 is a block diagram representing a configuration example of an object identification apparatus according to a modification of the first embodiment;
FIG. 10 is a conceptual diagram showing relationships of a difference area with respect to a reference image and an input image difference area with respect to an input image;
FIG. 11 is a conceptual diagram showing relationships of a difference area with respect to a reference image and an input image difference area with respect to an input image;
FIG. 12 is a conceptual diagram showing relationships of a difference area with respect to a reference image and an input image difference area with respect to an input image;
FIG. 13 is a conceptual diagram showing relationships of a difference area with respect to a reference image and an input image difference area with respect to an input image;
FIG. 14 is a block diagram representing a configuration example of a client when configuring an object identification apparatus according to the first embodiment via a network;
FIG. 15 is a block diagram representing a configuration example of a server when configuring an object identification apparatus according to the first embodiment via a network;
FIG. 16 is a block diagram representing a configuration example of an entire object identification apparatus according to the first embodiment when the object identification apparatus is configured via a network;
FIG. 17 is a block diagram representing a configuration example of an object identification apparatus according to a second embodiment;
FIG. 18 is a block diagram representing a configuration example of a local descriptor matching unit 17;
FIG. 19 is a block diagram representing a configuration example of a difference area estimating unit 18;
FIG. 20 is a block diagram representing a configuration example of a difference area descriptor extracting unit 19;
FIG. 21 is a block diagram representing a configuration example of an object identification apparatus according to a third embodiment;
FIG. 22 is a block diagram representing a configuration example of a difference area estimating unit 20;
FIG. 23 is a block diagram representing a configuration example of an object identification apparatus according to a fourth embodiment;
FIG. 24 is a block diagram representing a configuration example of the difference area estimating unit 21;
FIG. 25 is a block diagram representing a configuration example of a difference area estimating unit 21;
FIG. 26 is a block diagram representing a configuration example of an object identification apparatus according to a fifth embodiment;
FIG. 27 is a block diagram representing a configuration example of the difference area estimating unit 22;
FIG. 28 is a block diagram representing a configuration example of a difference area estimating unit 22;
FIG. 29 is a block diagram representing a configuration example of the difference area estimating unit 22;
FIG. 30 is a block diagram representing a configuration example of an object identification apparatus according to a sixth embodiment;
FIG. 31 is a block diagram representing a configuration example of a divided area descriptor extracting unit 23;
FIG. 32 is a block diagram representing a configuration example of a divided area descriptor converting unit 24;
FIG. 33 is a block diagram representing a configuration example of an object identification apparatus according to a seventh embodiment;
FIG. 34 is a block diagram representing a configuration example of an input image divided area descriptor converting unit 25;
FIG. 35 is a block diagram representing a configuration example of a selected divided area descriptor extracting unit 26;
FIG. 36 is a diagram showing relationships of an input image selected divided area in an input image and a selected divided area in a reference image;
FIG. 37 is a block diagram representing a configuration example of an object identification apparatus according to an eighth embodiment;
FIG. 38 is a block diagram representing a configuration example of a local descriptor matching unit 27;
FIG. 39 is a block diagram representing a configuration example of a descriptor matching unit 28; and
FIG. 40 is a block diagram representing a configuration example of an identification score integration determining unit 29.

### DETAILED DESCRIPTION

### First Embodiment

A first embodiment of the present invention will be described with reference to the drawings.

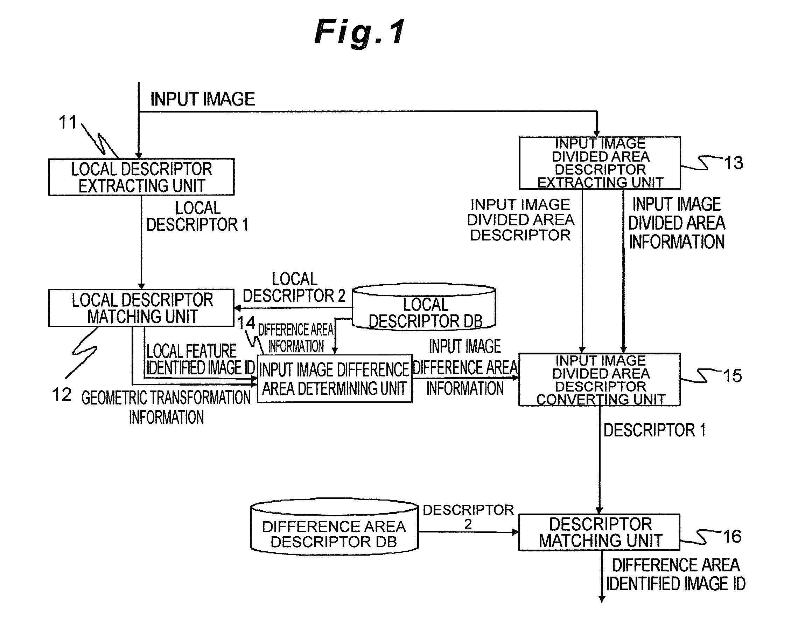

FIG. 1 is a block diagram showing a configuration of an object identification apparatus according to the first embodiment of the present invention. The object identification apparatus includes a local descriptor extracting unit 11, a local descriptor matching unit 12, an input image divided area descriptor extracting unit 13, an input image difference area determining unit 14, an input image divided area descriptor converting unit 15, and a descriptor matching unit 16. For example, the object identification apparatus can be configured using an information processing apparatus such as a personal computer or a mobile information terminal. In addition, for example, functions of respective units that constitute the object identification apparatus are realized by having a processor expand a program stored in a storage unit onto a memory and execute the program. Moreover, components used in other embodiments described later can be realized in a similar manner.

The local descriptor extracting unit 11 detects a feature point from an input image and extracts a descriptor of the detected feature point and a local area that is an area near the feature point as a local descriptor. Details of a process performed by the local descriptor extracting unit 11 will be described later.

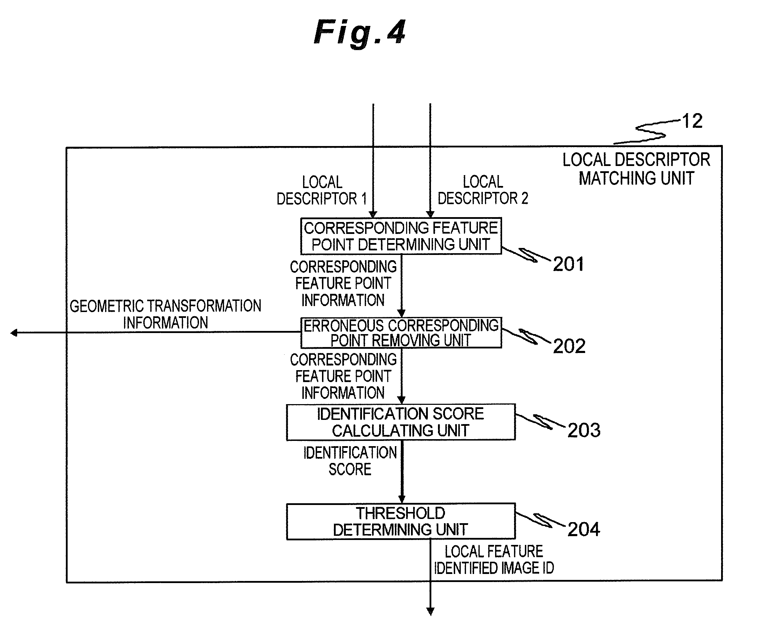

The local descriptor matching unit 12 matches a local descriptor 1 extracted from the input image by the local descriptor extracting unit 11 and a local descriptor 2 extracted from a reference image with each other and identifies a corresponding local descriptor. Details of a method for identifying a corresponding local descriptor will be described later with reference to FIG. 4. The local descriptor matching unit 12 identifies a corresponding local area between the input image and the reference image in accordance with a position when a local area to which the local descriptor corresponds is geometrically converted. For example, when a coordinate position of a local area in the input image after being rotationally moved by a prescribed angle around a center of the image is consistent with a coordinate position of a local area to which the local descriptor corresponds in the reference image, the local areas with consistent coordinate positions in the input image and the reference image are identified as corresponding local areas. In other words, the geometric transformation described above is performed so as to correct a geometric deviation between the reference image and the input image. In addition, when a corresponding local area is identified, the local descriptor matching unit 12 outputs information on the used geometric transformation (geometric transformation information) and a local feature identified image ID that is an image ID of the reference image to which the local area is determined to correspond.

The local descriptor 2 extracted from the reference image may be extracted from a plurality of reference images in advance and stored in a database such as a local descriptor DB shown in FIG. 1 or may be extracted on the fly from the reference image using the local descriptor extracting unit 11. When storing local descriptors in a database, local descriptors extracted from reference images including similar objects (showing similar objects as subjects) may be registered in association with each other. Details of the local descriptor matching unit 12 will be described later.

The input image divided area descriptor extracting unit 13 receives an input image and outputs an input image divided area descriptor and input image divided area information based on the input image. Details of a process performed by the input image divided area descriptor extracting unit 13 will be described later.

The input image difference area determining unit 14 performs a geometric transformation indicated by the geometric transformation information outputted from the local descriptor matching unit 12 on a reference image corresponding to the local feature identified image ID outputted from the local descriptor matching unit 12 or on a difference area of a reference image group associated with the local feature identified image ID and outputs input image difference area information.

In the present embodiment, when it is predicted that a slight difference may occur between an object shown in the input image and an object shown in the reference image, a difference area of the reference image refers to an area showing a portion in the reference image where the difference may occur. For example, when a difference area of the reference image is rectangular, information on the difference area may be coordinate value information of four corners of the rectangle. Alternatively, information on the difference area of the reference image may be information representing coordinate values of a pixel group in a reference image that constitutes the difference area.

As the input image difference area information, a coordinate value in an input image obtained by respectively performing a geometric transformation on coordinate values of four corners of a difference area in the reference image may be adopted. Alternatively, when information on a difference area in the reference image is coordinate value information of a pixel group constituting the difference area, a geometric transformation corresponding to the geometric transformation information can be performed on each pixel in the pixel group and coordinate value information of a pixel group constituting a difference area in the input image can be adopted as input image difference area information.

Difference area information of the reference image is stored in a database in advance. For example, when the local descriptor 2 is stored in a database such as the local descriptor DB shown in FIG. 1, the difference area information of the reference image may be stored in the local descriptor DB together with the local descriptor 2.

The input image divided area descriptor converting unit 15 receives input image difference area information outputted from the input image difference area determining unit 14 and an input image divided area descriptor and input image divided area information outputted from the input image divided area descriptor extracting unit 13 and outputs a descriptor 1 that is a descriptor extracted from a difference area in an input image based on the received information. Details of a process performed by the input image divided area descriptor converting unit 15 will be described later.

The descriptor matching unit 16 matches the descriptor 1 outputted from the input image divided area descriptor converting unit 15 with a descriptor 2 that is a descriptor extracted from a difference area in a reference image and outputs a matching result. In the matching, the descriptor matching unit 16 determines whether an object included in the input image and an object included in the reference image are the same (whether the input image and the reference image show a same object as a subject). When the objects are determined to be the same, the descriptor matching unit 16 outputs an image ID of the input image determined to be the same as a difference area identified image ID.

The local descriptor 2 may be extracted from a plurality of reference images in advance and stored in a database as shown in FIG. 1 or may be extracted on the fly from a reference image. When storing the local descriptor 2 in a database, a similar object may be associated and registered with the local descriptor 2. Details of the descriptor matching unit 16 will be described later.

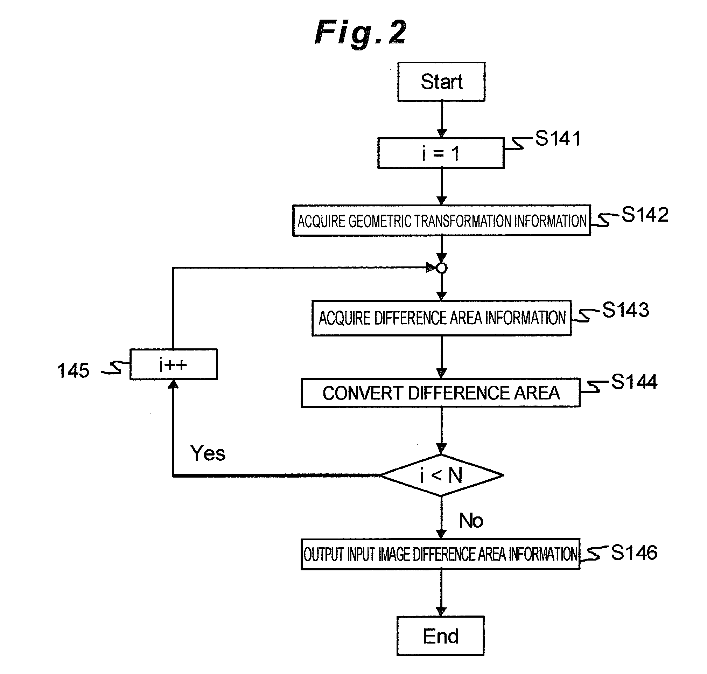

FIG. 2 is a flow chart showing a flow of processes by the input image difference area determining unit 14 shown in FIG. 1. As shown in FIG. 2, first, a variable i for controlling the processes is initialized in S141.

In S142, geometric transformation information outputted from the local descriptor matching unit 12 is acquired. In S143, difference area information of a reference image is acquired from the local descriptor DB. When a difference area of the reference image is rectangular, the difference area information acquired at this point may be coordinate value information of four corners of the rectangle or may be information representing coordinate values of a pixel group in a reference image constituting the difference area.

In S144, a transformation of the geometric transformation information acquired in S142 is performed on the difference area information acquired in S143. In this case, if the difference area information is coordinate value information of the four corners, the geometric transformation is performed on one of the four coordinate values. In addition, if the difference area information is coordinate value information of a pixel group in a reference image constituting the difference area, the geometric transformation is performed on one pixel among the pixel group. At this point, when the variable i is smaller than a prescribed number N, the value of the variable i is updated in S145 and processes of S143 and S144 are continued until the value of the variable i equals or exceeds N. N = 4 is set when the difference area information acquired in S143 is coordinate value information of the four corners in the reference image, and the number of pixels of a pixel group in a reference image constituting a difference area is set as the value of N when the difference area information is coordinate value information of the pixel group in the reference image constituting the difference area. Finally, in S146, the input image difference area information calculated in S144 is outputted and the process is finished.

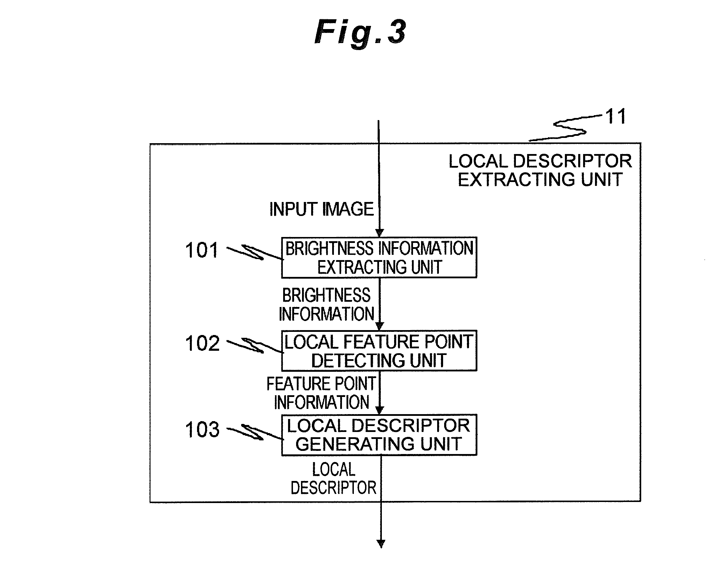

Next, the local descriptor extracting unit 11 will be described in detail with reference to FIG. 3. FIG. 3 is a block diagram representing a configuration example of the local descriptor extracting unit 11. The local descriptor extracting unit 11 includes a brightness information extracting unit 101, a local feature point detecting unit 102, and a local descriptor generating unit 103.

The brightness information extracting unit 101 receives an input image and extracts and exclusively outputs information regarding brightness from each pixel in the input image. In this case, the accepted input image is an image photographed by an imaging device such as a digital camera, a digital video camera, and a mobile phone, an image imported through a scanner, and the like. In addition, the image may be a compressed image such as a JPEG (Joint Photographic Experts Group) image or an uncompressed image such as a TIFF (Tagged Image File Format) image.

The local feature point detecting unit 102 detects a large number of characteristic points (feature points) from an image and outputs feature point information that is information related to each feature point. In this case, for example, feature point information refers to a coordinate position or a scale of a detected local feature point, an orientation of a feature point, a "feature point number" that is a unique ID (Identification) assigned to a feature point, or the like. Moreover, the local feature point detecting unit 102 may output the feature point information as a separate piece of feature point information for each direction of an orientation of each feature point. For example, the local feature point detecting unit 102 may be configured to output feature point information only with respect to a direction of a main orientation of each feature point or to also output feature point information with respect to directions of secondary and subsequent orientations. In addition, when the local feature point detecting unit 102 is configured to also output feature point information with respect to directions of secondary and subsequent orientations, the local feature point detecting unit 102 can attach a different feature point number to each direction of an orientation of each feature point. For example, the local feature point detecting unit 102 can use a DoG (Difference-of-Gaussian) process when detecting a feature point from an image and extracting feature point information. Specifically, the local feature point detecting unit 102 can determine a position and a scale of a feature point by using a DoG process to perform an extreme value search in a scale space. Furthermore, the local feature point detecting unit 102 can calculate an orientation of each feature point using a determined position and scale of a feature point and gradient information of a peripheral area. Moreover, the local feature point detecting unit 102 may use other methods such as the Fast-Hessian Detector method instead of DoG to detect a feature point from an image and extract feature point information. The local feature point detecting unit 102 may exclusively select important feature points from the internally detected feature points and exclusively output information related to the selected feature points as feature point information.

The local descriptor generating unit 103 receives the feature point information outputted from the local feature point detecting unit 102 and generates (describes) a local descriptor that is a descriptor of a local area with respect to each feature point (an area including a feature point and a periphery thereof). Moreover, the local descriptor generating unit 103 may output a local descriptor in a lossless compression format such as ZIP and LZH. When an importance of detected feature points is determined by the local feature point detecting unit 102, the local descriptor generating unit 103 can generate and output a local descriptor in an order of importance of the feature points. Alternatively, the local descriptor generating unit 103 may generate and output a local descriptor in an order of coordinate positions of feature points. First, based on descriptor information, the local descriptor generating unit 103 acquires a local area from which a descriptor is to be extracted based on a coordinate position, a scale, and an orientation of each detected feature point. Moreover, when a plurality of pieces of feature point information with different orientations exist for one feature point, a local area can be acquired with respect to each piece of feature point information. Next, after normalizing a local area by rotating the local area in accordance with an orientation direction of a feature point, the local area is divided into sub-areas. For example, a local area can be divided into 16 blocks (4 x 4 blocks). Next, a feature vector is generated for each sub-area of the local area. For example, a gradient direction histogram can be used as a feature vector of a sub-area. Specifically, a gradient direction histogram is generated by calculating a gradient direction for each pixel in each sub-area, quantizing the gradient direction into eight directions, and summing up frequencies of the eight quantized directions for each sub-area. At this point, a feature vector constituted by a gradient direction histogram of 16 blocks x 8 directions which is generated with respect to each feature point is outputted as a local descriptor. The outputted local descriptor is outputted so as to include coordinate position information of a feature point.

Next, the local descriptor matching unit 12 will be described in detail with reference to FIG. 4. FIG. 4 is a block diagram representing a configuration example of the local descriptor matching unit 12. As shown in FIG. 4, the local descriptor matching unit 12 includes a corresponding feature point determining unit 201, an erroneous corresponding point removing unit 202, an identification score calculating unit 203, and a threshold determining unit 204.

The corresponding feature point determining unit 201 receives the local descriptor 1 extracted from an input image by the local descriptor extracting unit 11 and the local descriptor 2 extracted from a reference image. The corresponding feature point determining unit 201 determines whether or not the local descriptor 1 and the local descriptor 2 correspond to each other and, if so, outputs corresponding feature point information describing that the local descriptor 1 and the local descriptor 2 correspond to each other. For example, when the local descriptor 1 and the local descriptor 2 are, respectively, sets of a descriptor describing a gradient histogram of a periphery of a feature point, distance calculations in a descriptor space are first performed for all combinations of local descriptors. Only when a minimum distance value is significantly smaller than a next small distance value, with respect to a combination of a local descriptor that produces the minimum distance value, a determination is made that the local descriptor and a local feature area of the local descriptor correspond to each other and position information of the local feature area and position information of the corresponding local feature area are outputted as corresponding feature point information.

The erroneous corresponding point removing unit 202 receives the corresponding feature point information from the corresponding feature point determining unit 201, distinguishes correctly corresponding feature points from erroneously-corresponding feature points among the corresponding feature points, and respectively outputs distinguished feature point information together with geometric transformation information used for the distinguishment. For example, a method such as RANSAC is applied to corresponding feature point information received from the corresponding feature point determining unit 201 and a geometric transformation that moves a coordinate in the reference image to a coordinate in the input image is estimated, and information on this geometric transformation is defined as geometric transformation information. The geometric transformation information estimated at this point is respectively applied to feature points in the reference image among the corresponding feature points, a determination of a correctly corresponding feature point is made when a feature point in the reference image is substantially consistent with a feature point in the input image, and a determination of an erroneously-corresponding feature point is conversely made when a feature point in the reference image is not consistent with a feature point in the input image.

The identification score calculating unit 203 receives the corresponding feature point information from the erroneous corresponding point removing unit 202 and outputs an identification score. As the outputted identification score, for example, the number of combinations of correctly corresponding feature points may be counted from among the corresponding feature point information received from the erroneous corresponding point removing unit 202, a table for mapping the number of combinations to a score ranging from 0 to 1 may be prepared in advance, and the identification score may be outputted by referring to the table. Alternatively, when the number of combinations of correctly corresponding feature points is denoted by c, by denoting a minimum number of corresponding feature points set in advance as m, m/(c + m) may be calculated as the identification score. The threshold determining unit 204 performs a threshold process on the identification score outputted from the identification score calculating unit 203, makes a determination that the images show a same object when the identification score is equal to or higher than the threshold, and outputs the ID of the reference image as a local feature identified image ID. The threshold set by the threshold determining unit 204 may be a value determined and internally stored in advance or a value provided from the outside.

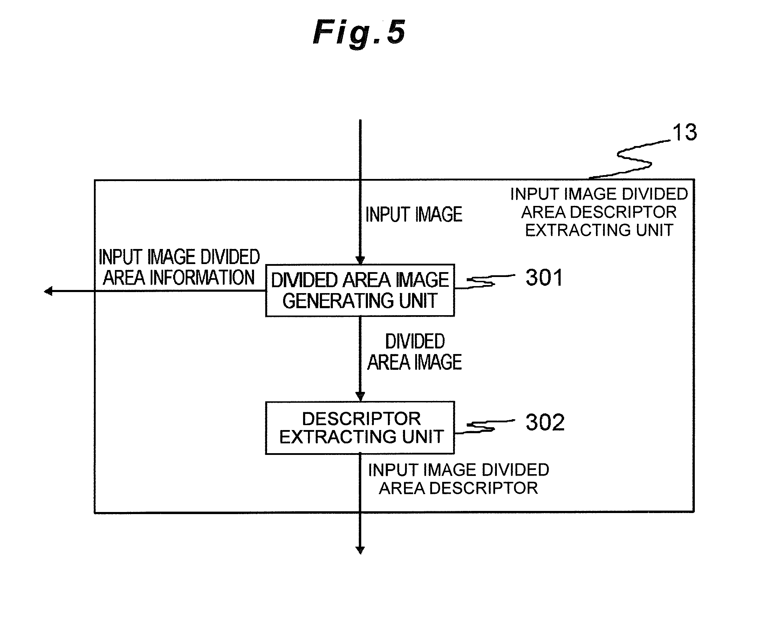

Next, the input image divided area descriptor extracting unit 13 will be described in detail with reference to FIG. 5. FIG. 5 is a block diagram representing a configuration example of the input image divided area descriptor extracting unit 13. The input image divided area descriptor extracting unit 13 includes a divided area image generating unit 301 and a descriptor extracting unit 302.

The divided area image generating unit 301 receives an input image and divides the input image according to a predetermined rule. The divided area image generating unit 301 outputs a divided area image that is an image of each divided area and input image divided area information that is information including coordinate information of each area and an area ID of each area. As coordinate information of each area, for example, when each area is a rectangle, coordinate information of four corners of each area may be adopted.

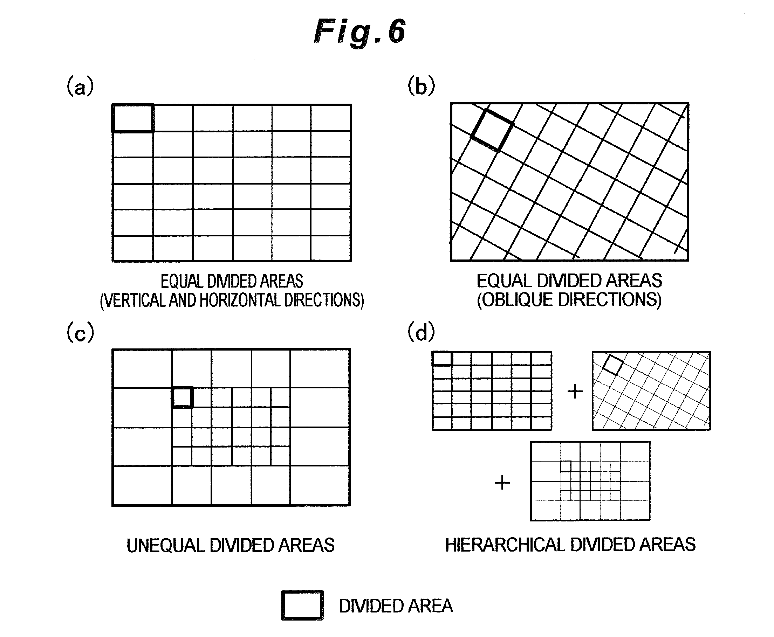

FIG. 6 is a diagram showing an example of a divided area generation pattern. As shown in FIGS. 6(a) and 6(b), divided areas may be generated by dividing an input area into areas with equal sizes in vertical and horizontal directions or in oblique directions. Alternatively, as shown in FIG. 6(c), divided areas may be generated by dividing an input area into areas with unequal sizes. Divided areas may be hierarchically generated using a plurality of divided area generation patterns as shown in FIG. 6(d).

The descriptor extracting unit 302 extracts a descriptor from each of the divided area images generated by the divided area image generating unit 301 and outputs the extracted descriptor as an input image divided area descriptor. As the input image divided area descriptor outputted by the descriptor extracting unit 302, for example, a descriptor such as a "color arrangement" and a "color histogram" may be extracted in order to perform an analysis on color information of a difference area in the input image and a difference area in the reference image. Alternatively, a descriptor capable of expressing "character-likeness" may be extracted in order to analyze minute differences in characters between a difference area in the input image and a difference area in the reference image.

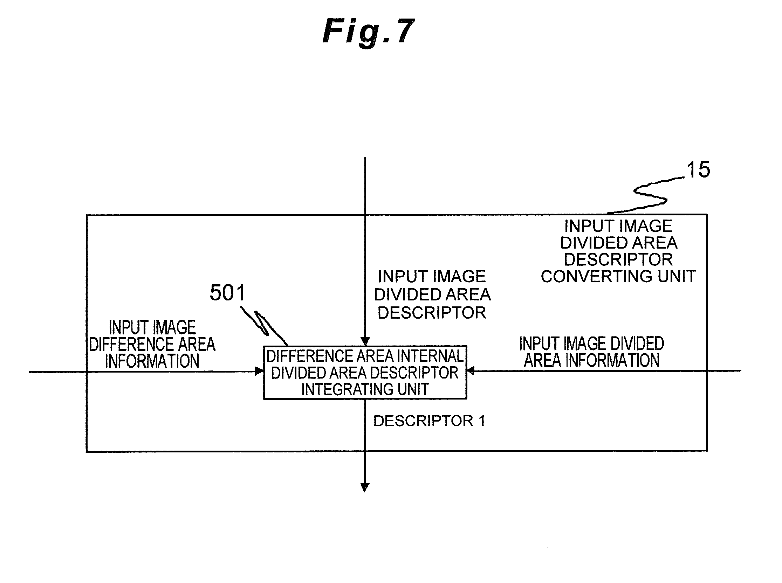

Next, the input image divided area descriptor converting unit 15 will be described in detail with reference to FIG. 7. FIG. 7 is a block diagram representing a configuration example of the input image divided area descriptor converting unit 15. As shown in FIG. 7, the input image divided area descriptor converting unit 15 includes a difference area internal divided area descriptor integrating unit 501.

The difference area internal divided area descriptor integrating unit 501 receives input image difference area information from the input image difference area determining unit 14 and receives an input image divided area descriptor and input image divided area information from the input image divided area descriptor extracting unit 13. Based on the received information, the difference area internal divided area descriptor integrating unit 501 outputs a descriptor 1 that is a descriptor in a difference area in the input image.

Specifically, the difference area internal divided area descriptor integrating unit 501 first identifies a divided area included in the difference area based on input image difference area information and input image divided area information. Input image divided area descriptors that are descriptors extracted from the respective identified divided areas are integrated to determine a value of a descriptor 1 that represents a descriptor in a difference area. For example, when the input image divided area descriptor outputted from the input image divided area descriptor extracting unit 13 is a "color histogram", a value obtained by adding up and normalizing color histograms with respect to divided areas included in the difference area information may be outputted as the descriptor 1. In addition, focusing attention on the fact that, among divided areas included in the difference area, there are divided areas that are completely-included in the difference area as well as divided areas that are only partially included in the difference area, a weight applied to a completely included divided area when integrating descriptors may be increased while a weight applied to a divided area that is only partially included when integrating descriptors may be reduced. In this case, weights may be set based on, for example, "a ratio of an area included in the difference area information among each divided area to an area of the divided area". When a size of each divided area is larger than the difference area, a descriptor extracted from a divided area having a largest overlap with the difference area may be outputted as-is as the descriptor 1. Moreover, when the input image divided area descriptor outputted from the input image divided area descriptor extracting unit 13 is a descriptor extracted from hierarchically-generated divided areas using a plurality of divided area generation patterns, the difference area internal divided area descriptor integrating unit 501 may integrate input image divided area descriptors using only a pattern which produces a largest number of divided areas that are completely included in the difference area in the input image among hierarchical divided area generation patterns.

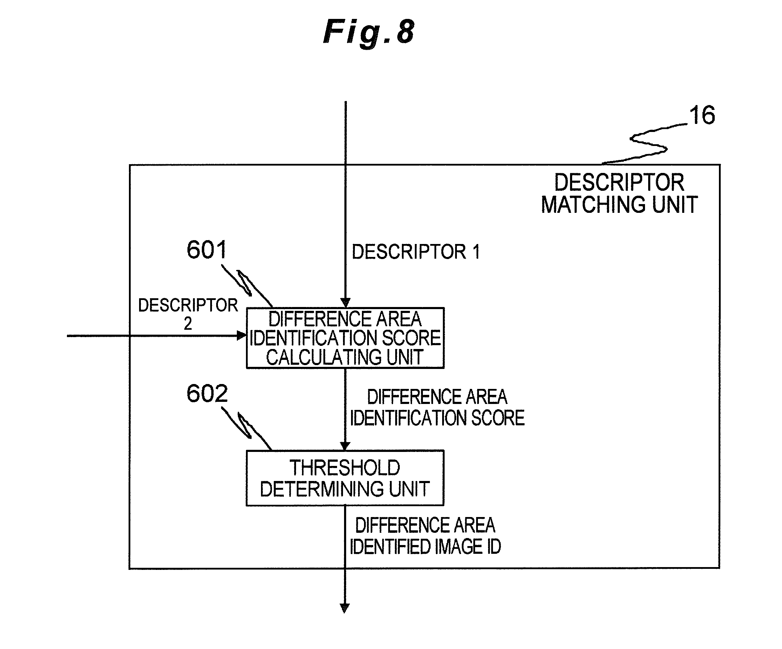

Next, the descriptor matching unit 16 will be described in detail with reference to FIG. 8. FIG. 8 is a block diagram representing a configuration example of the descriptor matching unit 16. The descriptor matching unit 16 includes a difference area identification score calculating unit 601 and a threshold determining unit 602.

The difference area identification score calculating unit 601 respectively receives a descriptor 1 as a descriptor extracted from a difference area of the input image and a descriptor 2 as a descriptor extracted from a difference area of the reference image. The difference area identification score calculating unit 601 outputs an identification score determined from the two received descriptors as a difference area identification score. The difference area identification score is a scale whose value increases as the similarity between the descriptor 1 and the descriptor 2 increases. For example, a distance between the descriptor 1 and the descriptor 2 on a descriptor space may be calculated and an inverse thereof may be outputted as a difference area identification score. Alternatively, when matching the descriptor 1 with descriptors 2 respectively extracted from a plurality of reference image groups, a minimum value of distances on the descriptor space among all descriptor combinations may be found and an inverse of a value obtained by dividing distances on the descriptor space for all descriptor combinations by the minimum value may be outputted as a difference area identification score. Alternatively, a table for mapping distance values between the descriptor 1 and the descriptor 2 on the descriptor space to scores ranging from 0 to 1 may be prepared in advance and a difference area identification score may be outputted by referring to the table.

The threshold determining unit 602 compares the difference area identification score outputted from the difference area identification score calculating unit 601 with a threshold, makes a determination that images show a same object when the identification score is equal to or higher than the threshold, and outputs the ID of the reference image as a difference area identified image ID. The threshold set by the threshold determining unit 602 may be a value determined and internally stored in advance or a value provided from the outside.

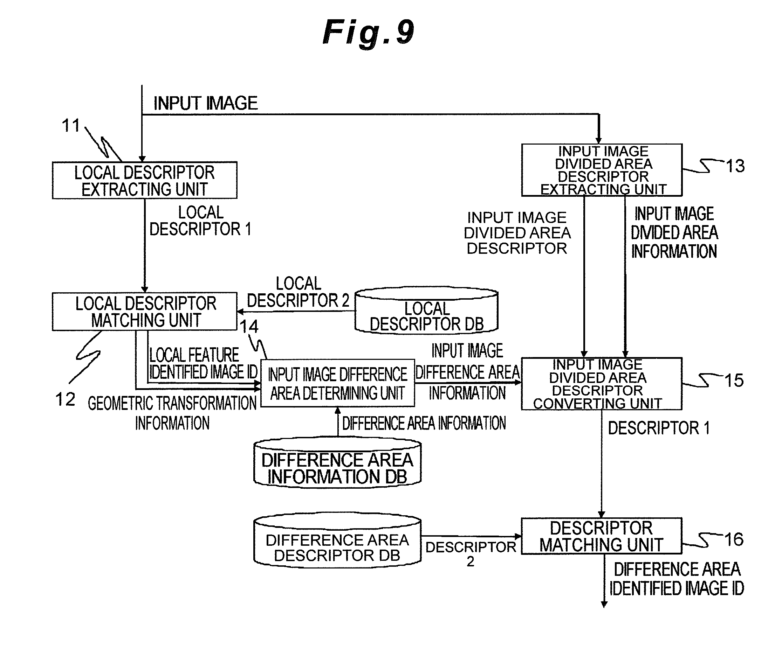

FIG. 9 shows a configuration of an object identification apparatus according to a modification of the present embodiment. The object identification apparatus shown in FIG. 9 differs from the object identification apparatus shown in FIG. 1 in that a difference area information DB that is a database exclusively storing difference area information is provided. The present embodiment can be realized by the configuration shown in FIG. 9 when the local descriptor 2 is not stored in the form of a database and can be extracted on the fly from a reference image.

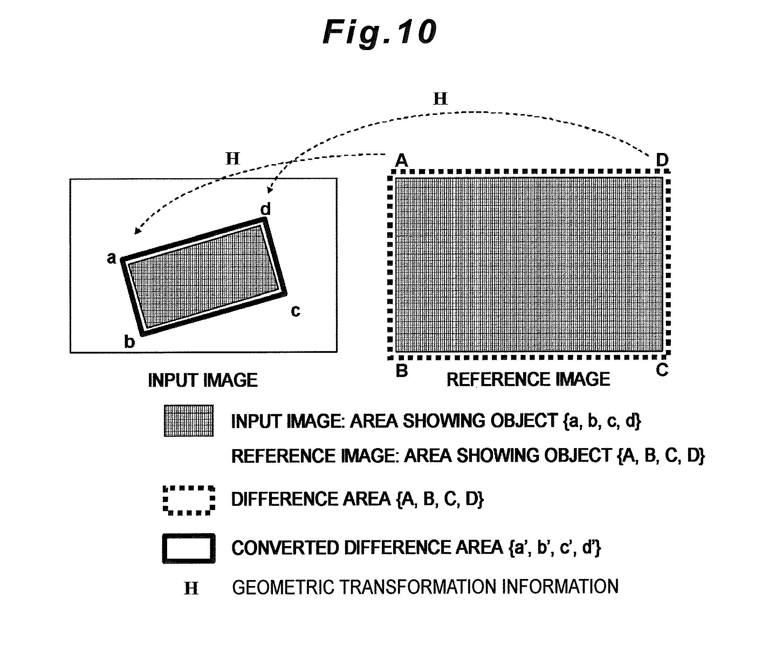

FIGS. 10 to 13 are conceptual diagrams showing patterns that are conceivable as relationships between an input image difference area in a reference image and a difference area in an input image.

FIG. 10 shows an example of a case in which an object is displayed across an entire reference image and a difference area is set with respect to the entire reference image. This example corresponds to cases in which, for example, characters, patterns, or the like inscribed on objects are substantially the same but colors of the objects differ from each other as often seen in a case of, for example, packages of candy that belong to a same brand but have different flavors. In other words, in this example, since it is conceivable that an entire input image may differ from an entire reference image, the entire reference image is set as a difference area.

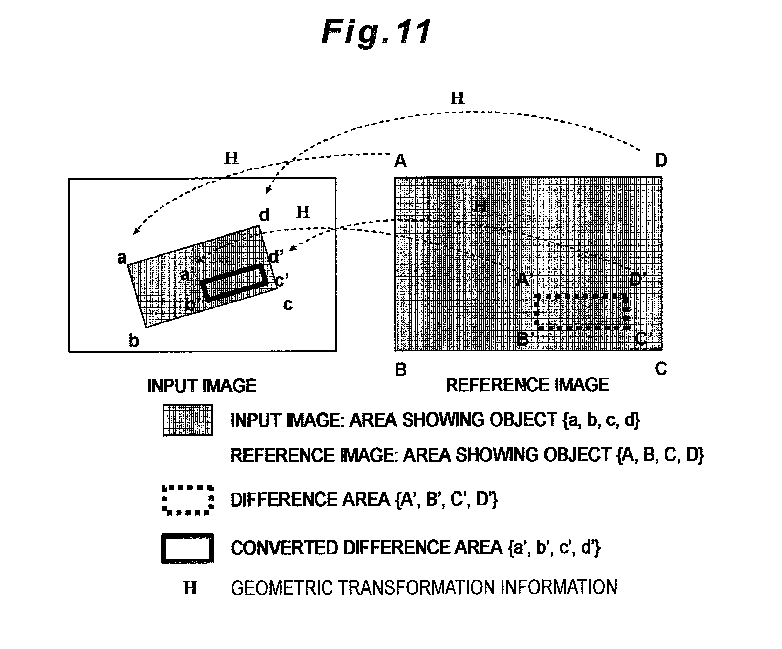

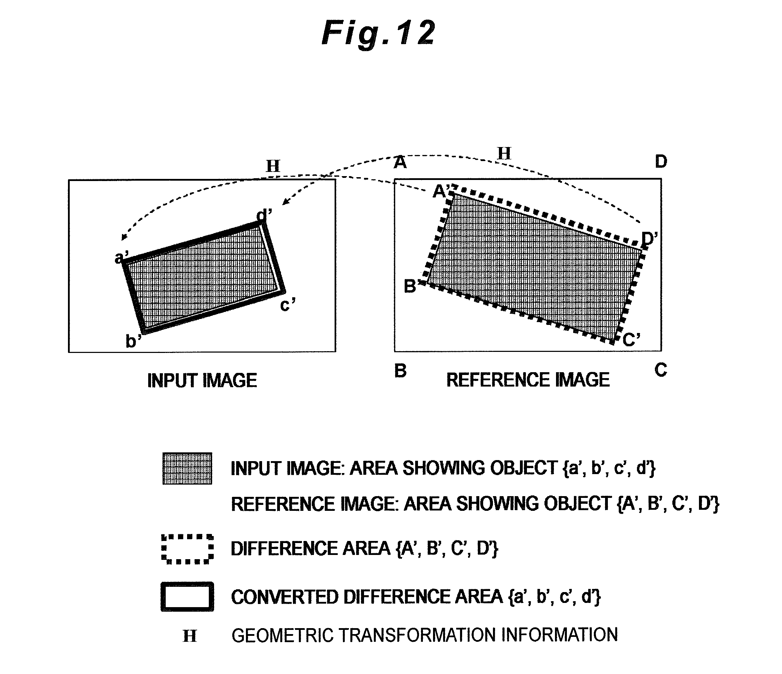

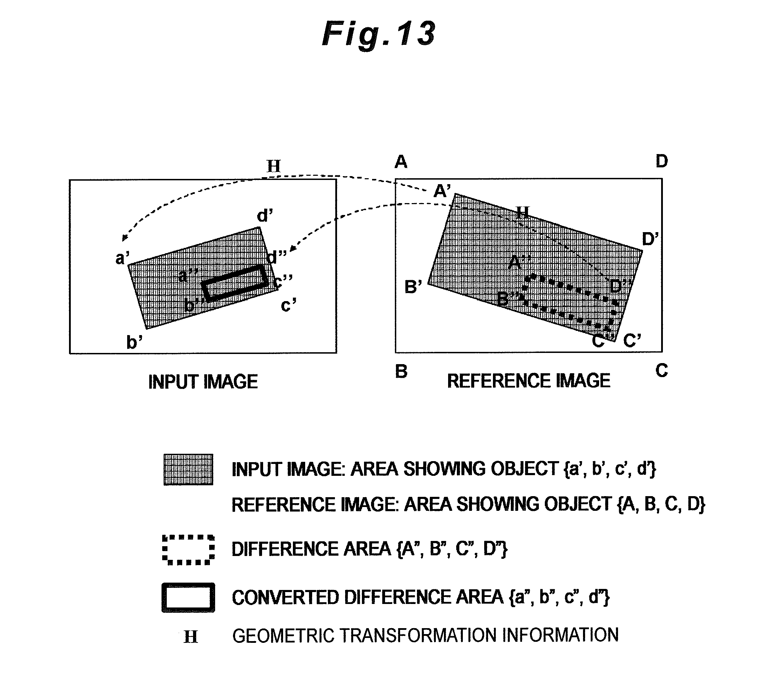

FIG. 11 shows an example of a case in which an object is displayed across an entire reference image and a difference area is set with respect to a part of the reference image. This example corresponds to cases in which, for example, objects are substantially the same but colors, characters, patterns, or the like differ from each other only in a certain part of the objects as often seen in a case of, for example, spines of books representing different volumes of a same series. In other words, in this example, since it is conceivable that a part of an input image may differ from a part of a reference image, a part of the reference image is set as a difference area. The examples shown in FIGS. 12 and 13 are substantially similar to the examples shown in FIGS. 10 and 11 but differ in that, instead of showing a reference image in its entirety, only a part of a reference image is shown.

In every case, in the present embodiment, information on an area set as the difference area is registered in a database in advance. In the present embodiment, a registered difference area in a reference image and a registered difference area in an input image are respectively obtained by extracting minimum required areas in which it is predicted that a difference may occur from the reference image and the input image. Therefore, even in a case where a local descriptor of the entire reference image and a local descriptor of the entire input image are compared to each other and the images are determined to be the same since there is only a slight difference, by once again exclusively comparing descriptors of difference images of the reference image and the input image, a minute difference attributable to a difference between objects can be distinguished. As a result, erroneous determinations that have been a problem when only using local descriptors can be suppressed.

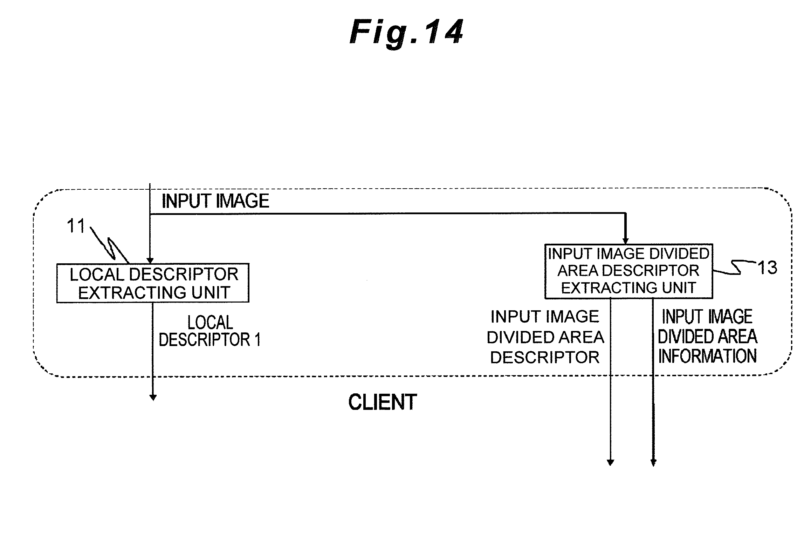

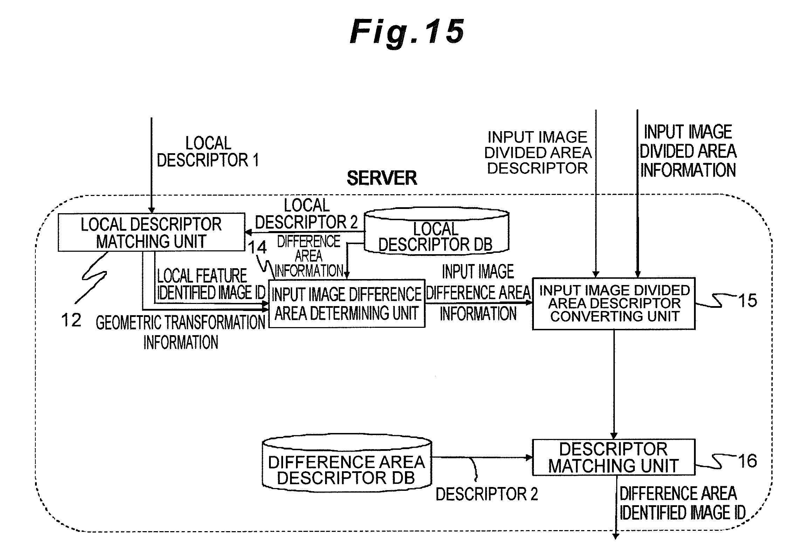

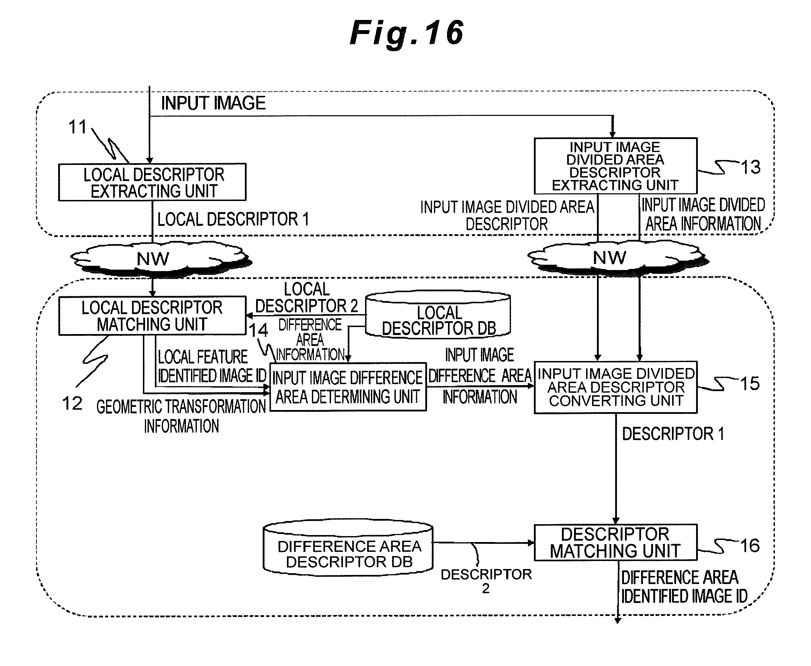

In addition, FIGS. 14 to 16 show an example of a case where the object identification apparatus according to the present embodiment is configured as a server-client system via a network. FIG. 14 is a block diagram showing a configuration example of a client, FIG. 15 is a block diagram showing a configuration example of a server, and FIG. 16 is a block diagram showing a configuration example of an entire system.

As shown in FIG. 14, the client includes a local descriptor extracting unit 11 and an input image divided area descriptor extracting unit 13. A local descriptor 1 outputted by the local descriptor extracting unit 11 and an input image divided area descriptor and input image divided area information outputted by the input image divided area descriptor extracting unit 13 are transmitted from the client to the server.

As shown in FIG. 15, the server includes a local descriptor matching unit 12, an input image difference area determining unit 14, an input image divided area descriptor converting unit 15, and a descriptor matching unit 16. At the server, an object appearing in an input image is identified using the local descriptor 1, the input image divided area descriptor, and the input image divided area information transmitted from the client.

As shown in FIG. 16, by connecting the configurations shown in FIGS. 14 and 15 to each other over a network, a server-client system is configured by the object identification apparatus according to the present embodiment. According to this configuration, an input image need not be directly transmitted to the server and transmitting a local descriptor, a divided area descriptor, and divided area information which are lighter in weight than the input image may suffice. Therefore, with the present embodiment, compared to a configuration in which a client does not perform any processes and simply transmits an input image to a server, an amount of time required by the server to perform an identification process and the client to obtain a result of the identification can be reduced.

As described above, according to the present embodiment, the local descriptor matching unit 12 determines whether or not a descriptor of each feature point extracted from an input image corresponds to a descriptor of each feature point extracted from a reference image. The input image divided area descriptor extracting unit 13 extracts a descriptor from each divided area created by dividing the input image. When a score based on the number of combinations of descriptors determined to be corresponding descriptors by the local descriptor matching unit 12 is equal to or higher than a prescribed value, the input image divided area descriptor converting unit 15 acquires a descriptor of a divided area included in an area of the input image corresponding to a position of an image area obtained by performing a geometric transformation for correcting a geometric deviation between the input image and the reference image on a prescribed area (difference area) of the reference image. Moreover, in the present embodiment, a difference area of the reference image is determined by the input image difference area determining unit 14. The descriptor matching unit 16 matches a descriptor acquired by the input image divided area descriptor converting unit 15 with a descriptor extracted from the difference area of the reference image and outputs a matching result. As a result, an input image showing a same object as an object shown in a reference image can be identified more accurately.

### Second Embodiment

A second embodiment of the present invention will be described with reference to the drawings. In the second embodiment, a difference area in a reference image is estimated and identification is performed without registering the difference area in the reference image in a database in advance.

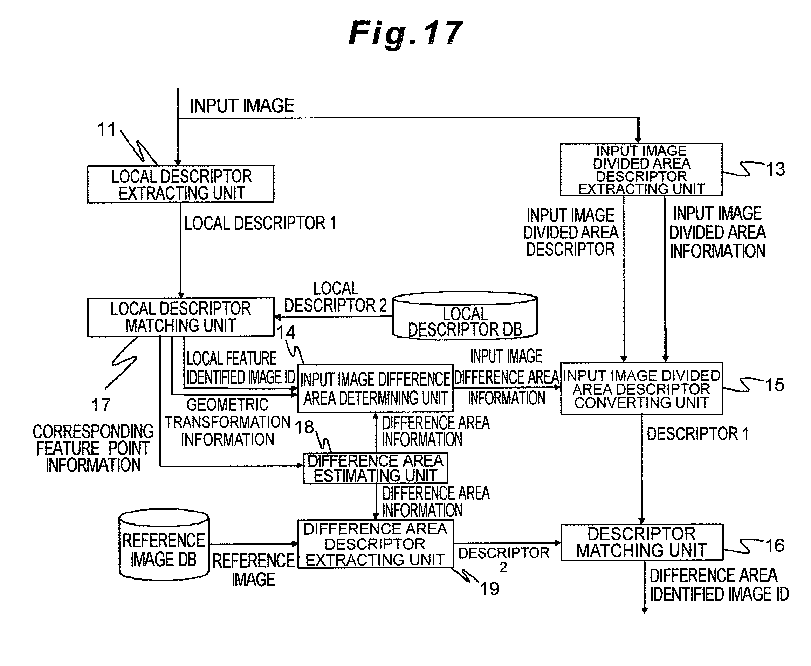

FIG. 17 is a block diagram showing a configuration of an object identification apparatus according to the second embodiment of the present invention. As shown in FIG. 17, the object identification apparatus according to the second embodiment includes a local descriptor extracting unit 11, a local descriptor matching unit 17, an input image divided area descriptor extracting unit 13, an input image difference area determining unit 14, an input image divided area descriptor converting unit 15, a descriptor matching unit 16, a difference area estimating unit 18, and a difference area descriptor extracting unit 19.

As shown, the object identification apparatus according to the second embodiment differs from the object identification apparatus according to the first embodiment in that the local descriptor matching unit 12 has been changed to the local descriptor matching unit 17 and the difference area information DB that is a database storing difference area information has been changed to the difference area estimating unit 18 and the difference area descriptor extracting unit 19. Details of processing operations by the local descriptor matching unit 17, the difference area estimating unit 18, and the difference area descriptor extracting unit 19 will be described later. Since other components are similar to those of the first embodiment, the components will be denoted by same reference symbols as those in the first embodiment, and a detailed description thereof will be omitted.

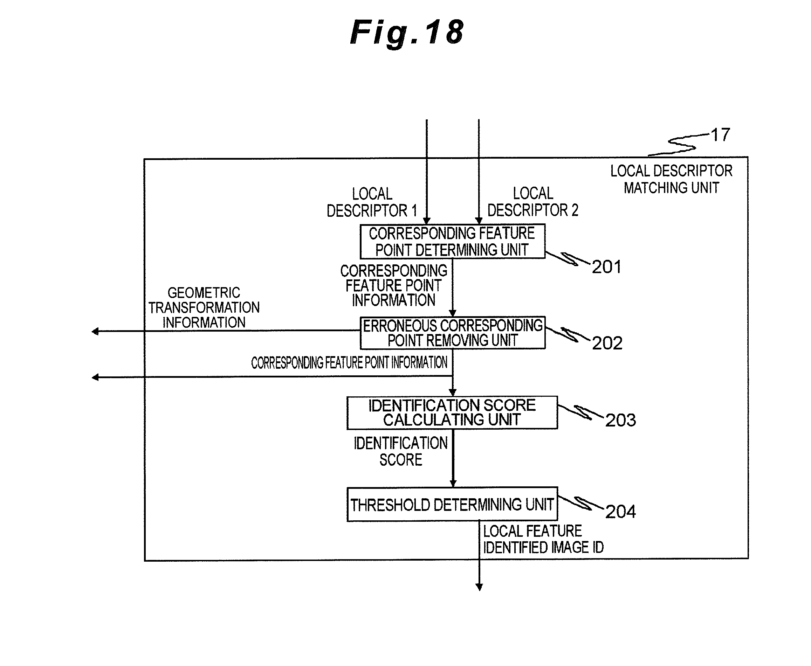

FIG. 18 is a block diagram representing a configuration example of the local descriptor matching unit 17. As shown in FIG. 18, the local descriptor matching unit 17 includes a corresponding feature point determining unit 201, an erroneous corresponding point removing unit 202, an identification score calculating unit 203, and a threshold determining unit 204. In other words, the components of the local descriptor matching unit 17 shown in FIG. 18 are the same as the components of the local descriptor matching unit 12 shown in FIG. 4. However, the local descriptor matching unit 17 shown in FIG. 18 differs from the local descriptor matching unit 17 shown in FIG. 18 in that, in addition to geometric transformation information being outputted from the erroneous corresponding point removing unit 202 and a local feature identified image ID being outputted from the threshold determining unit 204, corresponding feature point information outputted from the erroneous corresponding point removing unit 202 is now outputted from the local descriptor matching unit 17.

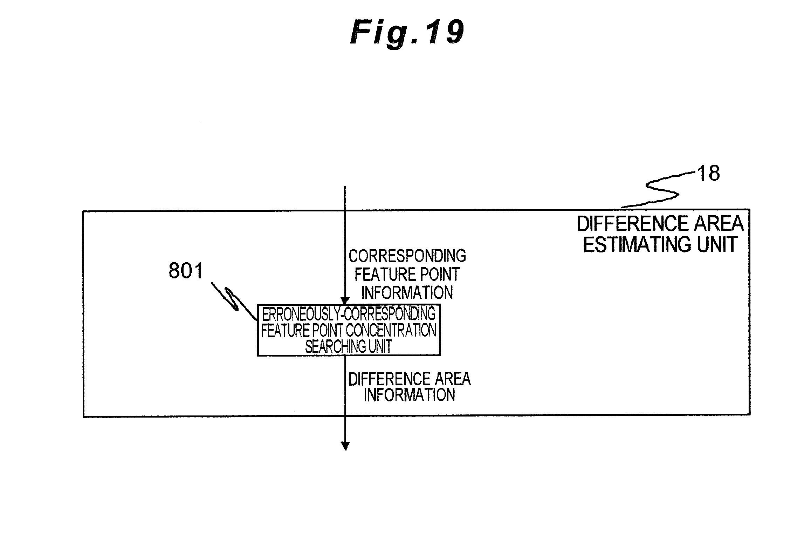

FIG. 19 is a block diagram representing a configuration example of the difference area estimating unit 18. As shown in FIG. 19, the difference area estimating unit 18 includes an erroneously-corresponding feature point concentration searching unit 801. The erroneously-corresponding feature point concentration searching unit 801 receives corresponding feature point information from the local descriptor matching unit 17 and outputs difference area information that is information regarding a difference area in a reference image. The corresponding feature point information received from the local descriptor matching unit 17 includes information on correctly corresponding feature points and information on erroneously-corresponding feature points. Therefore, by searching an area with a concentration of erroneously-corresponding feature points from the reference image using information on the erroneously-corresponding feature points included in the corresponding feature point information, a difference area in the reference image can be estimated. To search an area with a concentration of erroneously-corresponding feature points, for example, when a rectangular window with a certain size is defined, the rectangular window is moved in the difference image, and the number of erroneously-corresponding feature points in the rectangular window is equal to or larger than a certain number, an area of the rectangular window can be assumed to be a difference area. A method of estimating a difference area in a reference image is not limited thereto and any estimation method can be used as long as the estimation is based on an area with a concentration of erroneously-corresponding feature points. In other words, a difference area (prescribed area) of a reference image is an area including an area of the reference image that is determined by the local descriptor matching unit 17 to have a concentration of erroneously-corresponding feature points.

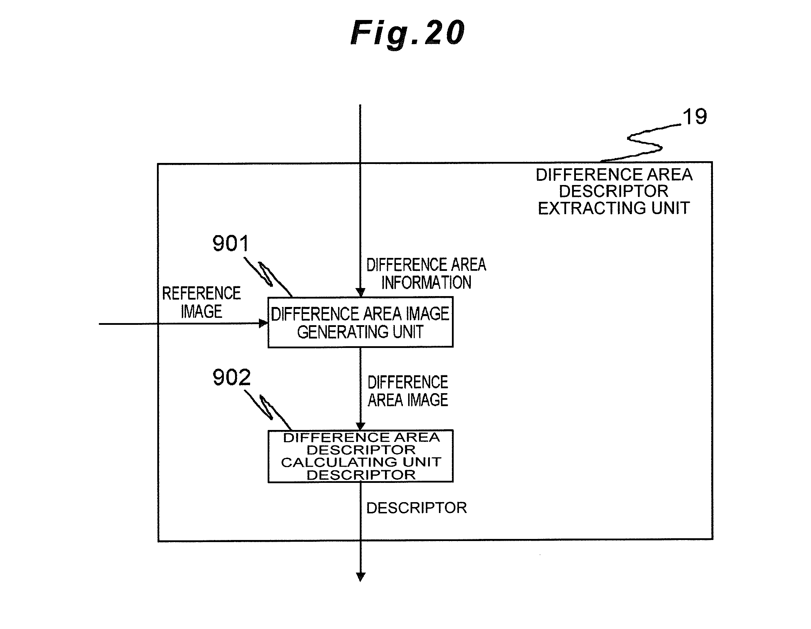

FIG. 20 is a block diagram representing a configuration example of the difference area descriptor extracting unit 19. As shown in FIG. 20 the difference area descriptor extracting unit 19 includes a difference area image generating unit 901 and a difference area descriptor calculating unit 902.

The difference area image generating unit 901 receives a reference image from a reference image DB and receives difference area information from the difference area estimating unit 18. When the received difference area information is coordinate value information of four corners of a difference area in the reference image, a difference area image in an input image is generated and outputted by determining pixels for which a value is to be read and an order in which the pixels are to be read from the reference image by, for example, sequentially reading pixels positioned on a straight line that connects two adjacent corners among the four corners. Alternatively, when the input image difference area information received from the difference area estimating unit 18 is information representing coordinate values of a pixel group constituting a difference area in the reference image, the difference area image generating unit 901 reads the reference image in the order of coordinate values and outputs the read results as a difference area image in the input image.

The difference area descriptor calculating unit 902 extracts a descriptor from the difference area image generated by the difference area image generating unit 901 and outputs the descriptor. As the descriptor extracted by the difference area descriptor calculating unit 902, for example, a descriptor such as a "color arrangement" and a "color histogram" may be extracted or a descriptor capable of expressing "character-likeness" may be extracted. The descriptor extracted at this point must be a descriptor extracted by a same process as the descriptor extracting unit 302 that is a component of the input image divided area descriptor extracting unit 13 shown in FIG. 5.

As described above, according to the present embodiment, since a difference area in a reference image can be estimated even without having to register the difference area in the reference image in a database in advance, the present embodiment is effective when an area in which it is predicted that a difference may occur cannot be registered in advance as a difference area in an article inspection system that utilizes object identification (for example, when exclusively distinguishing products with a defect in one part or another from among a large number of products). In addition, since estimation of a difference area in the reference image according to the present embodiment can be performed regardless of whether the difference area covers an entire object or the difference area corresponds to a part of the object, the present embodiment is effective with respect to any of the examples shown in FIGS. 10 to 13.

In addition, when configuring the present embodiment as a server-client system via a network, an input image need not be directly transmitted to the server and transmitting only a local descriptor, a divided area descriptor, and divided area information which are lighter in weight than the input image may suffice in a similar manner to the first embodiment. Therefore, with the present embodiment, compared to a configuration in which a client does not perform any processes and simply transmits an image to a server, an amount of time required by the server to perform an identification process and the client to obtain a result of the identification can be reduced.

### Third Embodiment

A third embodiment of the present invention will be described with reference to the drawings.

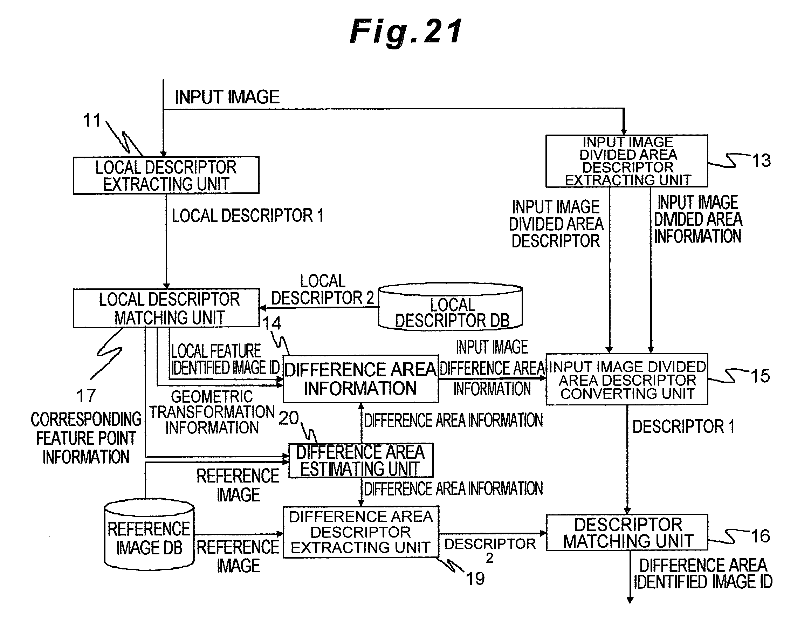

FIG. 21 is a block diagram showing a configuration of an object identification apparatus according to the third embodiment of the present invention. As shown in FIG. 21, the object identification apparatus according to the third embodiment includes a local descriptor extracting unit 11, a local descriptor matching unit 17, an input image divided area descriptor extracting unit 13, an input image difference area determining unit 14, an input image divided area descriptor converting unit 15, a descriptor matching unit 16, a difference area estimating unit 20, and a difference area descriptor extracting unit 19.

As described above, the object identification apparatus according to the third embodiment differs from the second embodiment in that the difference area estimating unit 18 of the object identification apparatus according to the second embodiment has been changed to the difference area estimating unit 20. Details of the processing by the difference area estimating unit 20 will be described later. Since other components are similar to those of the second embodiment, the components will be denoted by same reference symbols and a detailed description thereof will be omitted.

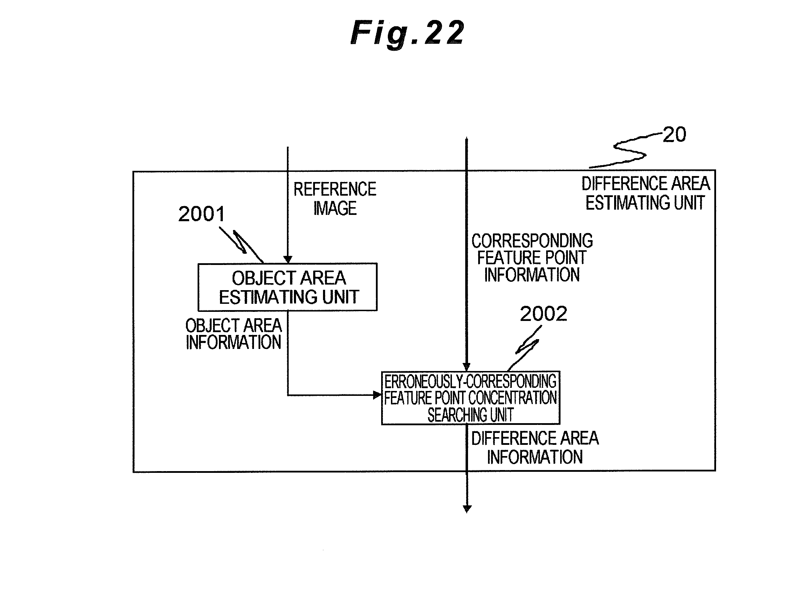

FIG. 22 is a block diagram representing a configuration example of the difference area estimating unit 20. As shown in FIG. 22, the difference area estimating unit 20 includes an object area estimating unit 2001 and an erroneously-corresponding feature point concentration searching unit 2002.

The object area estimating unit 2001 receives a reference image corresponding to a local feature identified image ID outputted from the local descriptor matching unit 17 or a reference image group associated with the local feature identified image ID and outputs object area information that is information representing an area in which an object exists in a reference image. The reference image received at this point may be stored in advance in a database as shown in FIG. 21 or may be acquired from outside of the object identification apparatus. Conceivable examples of processes by the object area estimating unit 2001 include a method of roughly estimating an object area by analyzing edge intensity in a reference image and a method involving learning an image pattern of a background area in advance and roughly estimating an object area as an area other than a background.

The erroneously-corresponding feature point concentration searching unit 2002 is similar to the erroneously-corresponding feature point concentration searching unit 801 that is a component of the difference area estimating unit 18 shown in FIG. 19. However, the erroneously-corresponding feature point concentration searching unit 2002 differs from the second embodiment in that object area information outputted from the object area estimating unit 2001 is inputted in addition to corresponding feature point information received from the local descriptor matching unit 17. The erroneously-corresponding feature point concentration searching unit 2002 only focuses on points inside an object area among corresponding feature points and searches for an area with a concentration of erroneously-corresponding feature points.

In other words, the erroneously-corresponding feature point concentration searching unit 2002 estimates a difference area from inside an object area in a reference image. Therefore, in the present embodiment, a difference area in the reference image can be estimated without being affected by an erroneously-corresponding feature point that appears from an area other than the object. Specifically, a difference area (prescribed area) in the reference image is an area including an area that is determined by the local descriptor matching unit 17 to have a concentration of erroneously-corresponding feature points among an area showing an object among the reference image. In addition, since a range in which an area with a concentration of erroneously-corresponding feature points is to be searched among the reference image is limited, the erroneously-corresponding feature point concentration searching unit 2002 is capable of performing a process at a higher speed than the erroneously-corresponding feature point concentration searching unit 801 whose search range is an entire reference image.

According to the present embodiment, in a similar manner to the second embodiment, since a difference area in a reference image can be estimated even without having to register the difference area in the reference image in a database in advance, the present embodiment is effective when information regarding a difference area cannot be registered in advance in an article inspection system that utilizes object identification (for example, when exclusively distinguishing products with a defect in one part or another from among a large number of products). In addition, while estimation of a difference area in the reference image according to the present embodiment can be performed regardless of whether the difference area is an entire object or a part of the object, since the difference area can be estimated with high accuracy without being affected by an erroneously-corresponding feature point that appears from an area other than the object, the present embodiment is particularly effective, for example, in cases of the examples shown in FIGS. 12 and 13.

In addition, when configuring the present embodiment as a server-client system via a network, an input image need not be directly transmitted to the server and transmitting only a local descriptor, a divided area descriptor, and divided area information which are lighter in weight than the input image may suffice in a similar manner to the first and second embodiments. Therefore, with the present embodiment, compared to a configuration in which a client does not perform any processes and simply transmits an image to a server, an amount of time required by the server to perform an identification process and the client to obtain a result of the identification can be reduced.

### Fourth Embodiment

A fourth embodiment of the present invention will be described with reference to the drawings. In the fourth embodiment, another method is used as a difference area estimation method.

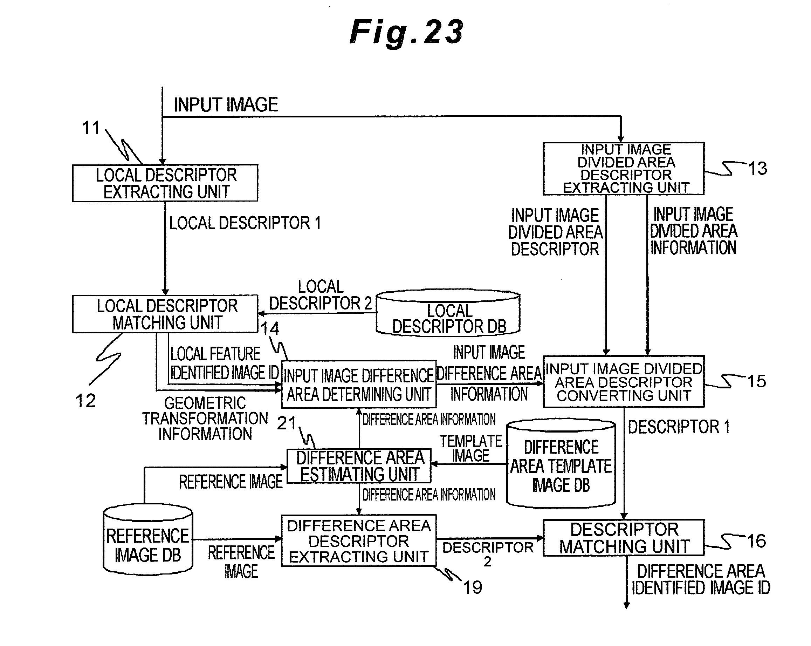

FIG. 23 is a block diagram showing a configuration of an object identification apparatus according to the fourth embodiment of the present invention. As shown in FIG. 23, the object identification apparatus according to the fourth embodiment includes a local descriptor extracting unit 11, a local descriptor matching unit 12, an input image divided area descriptor extracting unit 13, an input image difference area determining unit 14, an input image divided area descriptor converting unit 15, a descriptor matching unit 16, a difference area estimating unit 21, and a difference area descriptor extracting unit 19.

As described above, the object identification apparatus according to the fourth embodiment differs from the third embodiment in that the local descriptor matching unit 17 and the difference area estimating unit 20 of the object identification apparatus according to the third embodiment has been changed to the local descriptor matching unit 12 and the difference area estimating unit 21. The local descriptor matching unit 12 is similar to the local descriptor matching unit 12 of the object identification apparatus according to the first embodiment and a detailed description thereof will be omitted. Details of the difference area estimating unit 21 will be described later. Since other components are similar to those of the third embodiment, the components will be denoted by same reference symbols and a detailed description thereof will be omitted.

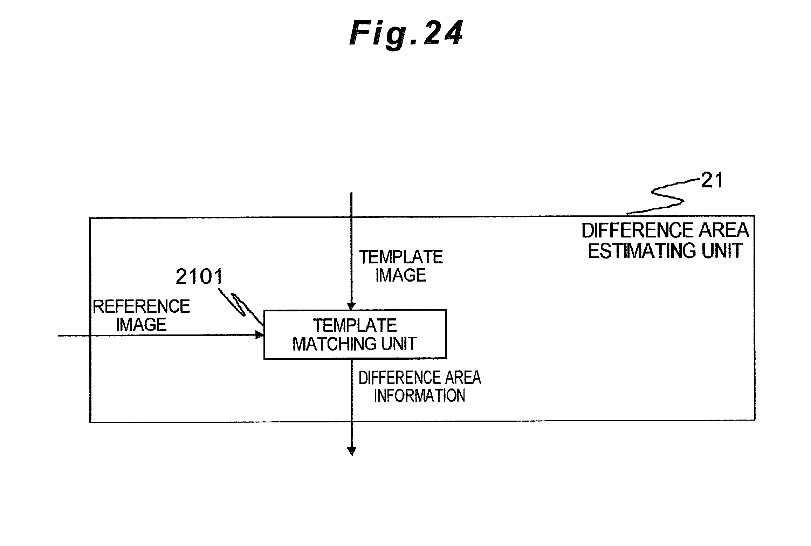

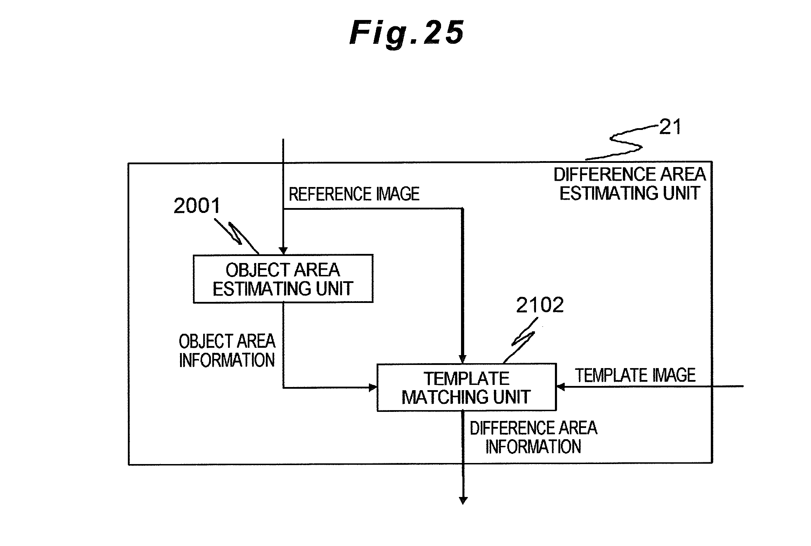

FIGS. 24 and 25 are block diagrams representing configuration examples of the difference area estimating unit 21. Each drawing will be described below.

As shown in FIG. 24, the difference area estimating unit 21 includes a template matching unit 2101. The template matching unit 2101 receives a reference image corresponding to a local feature identified image ID outputted from the local descriptor matching unit 12 (or a reference image group associated with the local feature identified image ID) and, at the same time, receives a template image of a difference area corresponding to the local feature identified image ID outputted from the local descriptor matching unit 12 (or a template image group associated with the local feature identified image ID), and outputs difference area information based on the received image group. Specifically, the template image is an image pattern that is typically observed in a periphery of a difference area. The template matching unit 2101 estimates a difference area in a reference image by performing a template matching process in which each area in the reference image is matched with the template image and an area most similar to the template image is searched. In other words, an area whose degree of similarity with a prescribed pattern image is equal to or higher than a prescribed value among the reference image is set as the difference area in the reference image. The template image may be stored in advance in a database as shown in FIG. 23 or may be acquired from outside of the object identification apparatus.

Alternatively, as a modification, the difference area estimating unit 21 may include an object area estimating unit 2001 and a template matching unit 2102 as shown in FIG. 25. The object area estimating unit 2001 shown in FIG. 25 is the same as the object area estimating unit 2001 that is a component of the difference area estimating unit 20 shown in FIG. 20 and a detailed description thereof will be omitted.

The template matching unit 2102 is similar to the template matching unit 2101 that is a component of the difference area estimating unit 21 shown in FIG. 24. The template matching unit 2102 differs from the latter unit in that object area information outputted from the object area estimating unit 901 is inputted in addition to the reference image corresponding to the local feature identified image ID outputted from the local descriptor matching unit 12 and the template image of a difference area corresponding to the local feature identified image ID outputted from the local descriptor matching unit 12. The template matching unit 2102 can estimate a difference area in a reference image by performing template matching using a template image only on an object area in the reference image. In addition, with the template matching unit 2102, since a range of an area in the reference image to be matched with the template image is limited, the template matching unit 2102 is capable of performing processes at a higher speed than the template matching unit 2101 which matches a range of an area equal to the entire reference image with the template image.

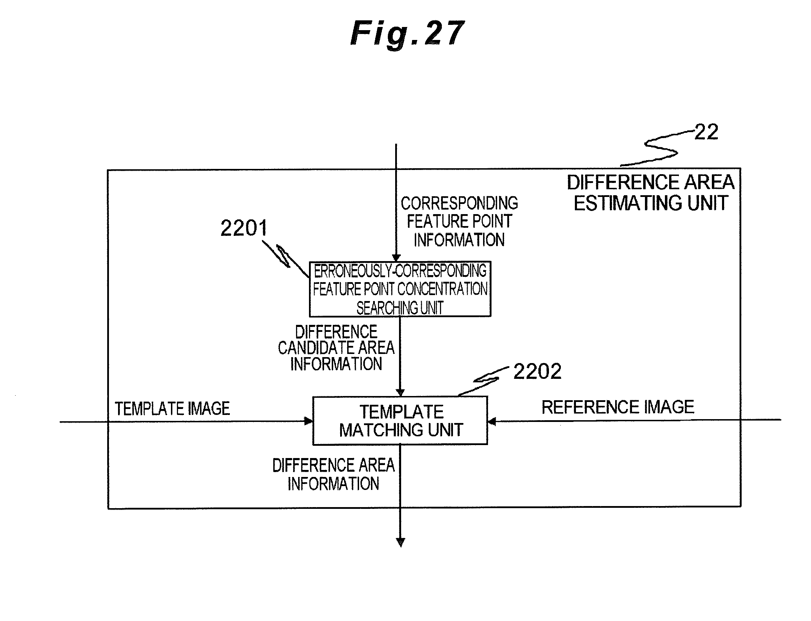

In the present embodiment, while a difference area in a reference image need not be registered in advance in a database in a similar manner to the second and three embodiments, if an image pattern typically observed in the difference area is known in advance, the difference area can be estimated by using the image pattern as a template image. For example, when exclusively identifying specific mail from among a plurality of mail images which show a same envelope and only differ from one another in addresses, an area where the address is described can be defined as an image pattern in which a layout of character strings representing a postal code, an address, an addressee, and the like is more or less determined. Therefore, in such cases, the present embodiment is effective. In addition, while estimation of a difference area in the reference image according to the present embodiment can be performed regardless of whether the difference area is an entire object or a part of the object, since the difference area can be estimated after removing the influence of a background by first estimating an object area in a similar manner to the third to fifth embodiments when the difference area estimating unit 22 is configured as shown in FIG. 27, the difference area can be estimated with high accuracy. Accordingly, the present embodiment is particularly effective in cases such as the examples shown in FIGS. 10 and 11.

In addition, when configuring the present embodiment as a server-client system via a network, an input image need not be directly transmitted to the server and transmitting only a local descriptor, a divided area descriptor, and divided area information which are lighter in weight than the input image may suffice in a similar manner to the first to third embodiments. Therefore, with the present embodiment, compared to a configuration in which a client does not perform any processes and simply transmits an image to a server, an amount of time required by the server to perform an identification process and the client to obtain a result of the identification can be reduced.

### Fifth Embodiment

A fifth embodiment of the present invention will be described with reference to the drawings.

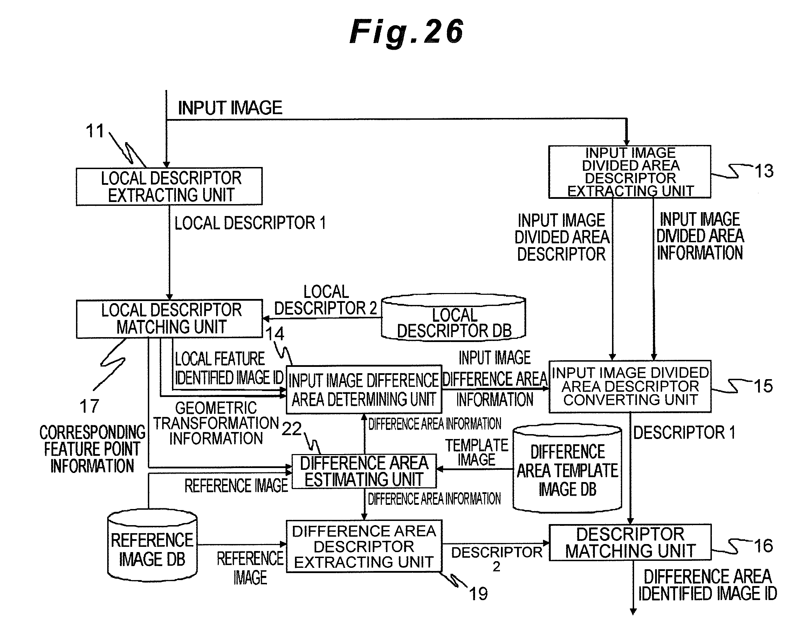

FIG. 26 is a block diagram showing a configuration of an object identification apparatus according to the fifth embodiment of the present invention. As shown in FIG. 26, the object identification apparatus according to the fifth embodiment includes a local descriptor extracting unit 11, a local descriptor matching unit 17, an input image divided area descriptor extracting unit 13, an input image difference area determining unit 14, an input image divided area descriptor converting unit 15, a descriptor matching unit 16, a difference area estimating unit 22, and a difference area descriptor extracting unit 19.

As described above, the object identification apparatus according to the fifth embodiment is configured so as to combine the object identification apparatus according to the second embodiment and the object identification apparatus according to the fourth embodiment. The object identification apparatus according to the fifth embodiment differs from the object identification apparatus according to the second embodiment in that the difference area estimating unit 18 has been changed to the difference area estimating unit 22. Details of a process performed by the difference area estimating unit 22 will be described later. Since other components are similar to those of the second embodiment, the components will be denoted by same reference symbols and a detailed description thereof will be omitted.

FIGS. 27 to 29 are block diagrams representing configuration examples of the difference area estimating unit 22. Each drawing will be described below.

The difference area estimating unit 22 shown in FIG. 27 includes an erroneously-corresponding feature point concentration searching unit 2201 and a template matching unit 2202. The erroneously-corresponding feature point concentration searching unit 2201 shown in FIG. 27 is substantially the same as the erroneously-corresponding feature point concentration searching unit 801 that is a component of the difference area estimating unit 18 shown in FIG. 19 but differs in that the erroneously-corresponding feature point concentration searching unit 2201 outputs difference candidate area information instead of difference area information. The difference candidate area information outputted by the erroneously-corresponding feature point concentration searching unit 2201 may be the same as difference area information outputted by the erroneously-corresponding feature point concentration searching unit 801 or area information representing an area slightly larger than the difference area information may be adopted instead.

In addition, the template matching unit 2202 shown in FIG. 27 is similar to the template matching unit 2102 that is a component of the difference area estimating unit 21 shown in FIG. 25 but differs in that difference candidate area information is inputted instead of object area information. In other words, the template matching unit 2202 shown in FIG. 27 estimates a difference area in a reference image by performing template matching using a template image only on a difference candidate area in the reference image that is estimated by the erroneously-corresponding feature point concentration searching unit 2201. Since the difference area information outputted from the template matching unit 2202 represents a difference area further narrowed down by the template matching unit 2202 from difference candidate areas estimated by the erroneously-corresponding feature point concentration searching unit 2201, difference area information with high reliability is outputted.

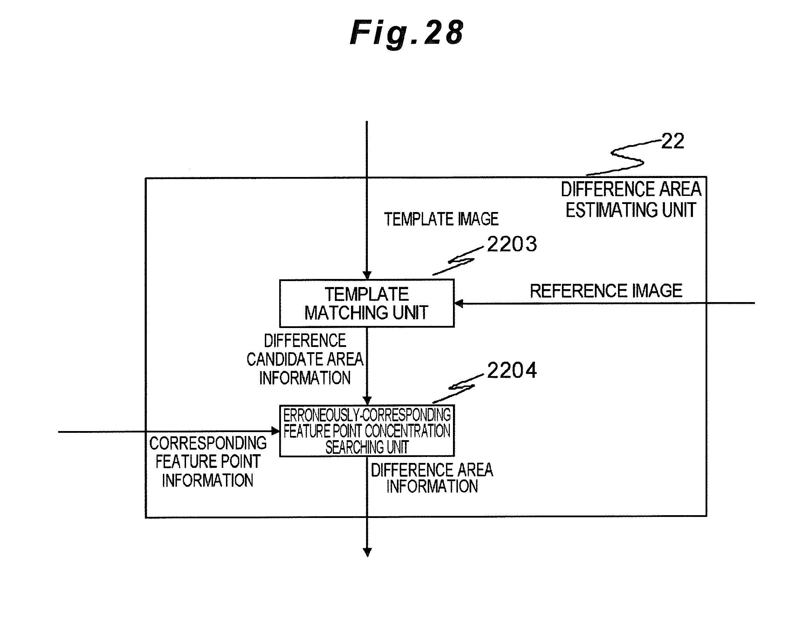

Furthermore, the difference area estimating unit 22 shown in FIG. 28 can also be constituted by a template matching unit 2203 and an erroneously-corresponding feature point concentration searching unit 2204. The template matching unit 2203 shown in FIG. 28 is substantially the same as the template matching unit 2101 that is a component of the difference area estimating unit 21 shown in FIG. 24 but differs in that the template matching unit 2203 outputs difference candidate area information instead of difference area information. The difference candidate area information outputted by the template matching unit 2203 may be the same as difference area information outputted by the template matching unit 2101 or area information representing an area slightly larger than the difference area information may be adopted instead.

In addition, the erroneously-corresponding feature point concentration searching unit 2204 shown in FIG. 28 is similar to the erroneously-corresponding feature point concentration searching unit 2002 that is a component of the difference area estimating unit 20 shown in FIG. 22 but differs in that difference candidate area information is inputted instead of object area information. Since the difference area information outputted from the erroneously-corresponding feature point concentration searching unit 2204 represents a difference area further narrowed down by the erroneously-corresponding feature point concentration searching unit 2204 from difference candidate areas estimated by the template matching unit 2203, difference area information with high reliability is outputted.

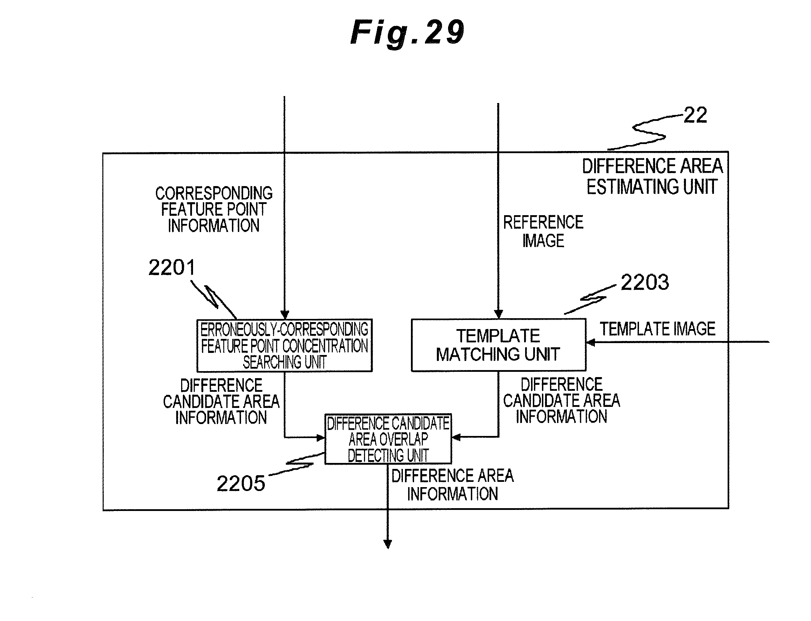

Furthermore, the difference area estimating unit 22 shown in FIG. 29 includes an erroneously-corresponding feature point concentration searching unit 2201, a template matching unit 2203, and a difference candidate area overlap detecting unit 2205. The erroneously-corresponding feature point concentration searching unit 2201 shown in FIG. 29 is the same as the erroneously-corresponding feature point concentration searching unit 2201 that is a component of the difference area estimating unit 22 shown in FIG. 27 and a detailed description thereof will be omitted. The template matching unit 2203 shown in FIG. 29 is the same as the template matching unit 2203 that is a component of the difference area estimating unit 22 shown in FIG. 28 and a detailed description thereof will be omitted.

The difference candidate area overlap detecting unit 2205 receives the difference candidate area information outputted from the erroneously-corresponding feature point concentration searching unit 2201 and the difference candidate area information outputted from the template matching unit 2203, determines that an overlapping area of the two difference candidate areas to be a difference area, and outputs difference area information thereof. Since the difference area information outputted from the difference candidate area overlap detecting unit 2205 is information regarding an area determined to be a difference candidate area by both the erroneously-corresponding feature point concentration searching unit 2201 and the template matching unit 2203, highly reliable difference area information is outputted.

In the present embodiment, while a difference area in a reference image need not be registered in advance in a database in a similar manner to the second to fourth embodiments, if an image pattern typically observed in the difference area is known in advance in a similar manner to the fourth embodiment, the difference area can be estimated by using the image pattern as a template image. For example, when exclusively identifying specific mail from among a plurality of mail images which show a same envelope and only differ from one another in addresses, an area where the address is described can be defined as an image pattern in which a layout of character strings representing a postal code, an address, an addressee, and the like is more or less determined. Therefore, in such cases, the present embodiment is effective. In addition, while a difference area in a reference image can be estimated according to the present embodiment regardless of whether the difference area is an entire object or a part of the object, since a highly reliable difference area can be obtained in comparison with the second embodiment and the like, highly accurate identification can be achieved. Moreover, while the present embodiment described heretofore represents a configuration combining the object identification apparatus according to the second embodiment with the object identification apparatus according to the fourth embodiment, the configuration shown in FIG. 26 may be considered as a configuration combining the object identification apparatus according to the third embodiment with the object identification apparatus according to the fourth embodiment. Specifically, when the difference area estimating unit 22 is configured as shown in FIGS. 27, 28, and 29, an object area estimating unit can be added in front of the erroneously-corresponding feature point concentration searching unit 2201 and the template matching unit 2203. In this case, since a difference area is to be estimated from among an object area after removing the influence of a background, the configuration is particularly effective in cases such as the examples shown in FIGS. 12 and 13.

In addition, when configuring the present embodiment as a server-client system via a network, an input image need not be directly transmitted to the server and transmitting only a local descriptor, a divided area descriptor, and divided area information which are lighter in weight than the input image may suffice in a similar manner to the first to fourth embodiments. Therefore, with the present embodiment, compared to a configuration in which a client does not perform any processes and simply transmits an image to a server, an amount of time required by the server to perform an identification process and the client to obtain a result of the identification can be reduced.

### Sixth Embodiment

A sixth embodiment of the present invention will be described with reference to the drawings.

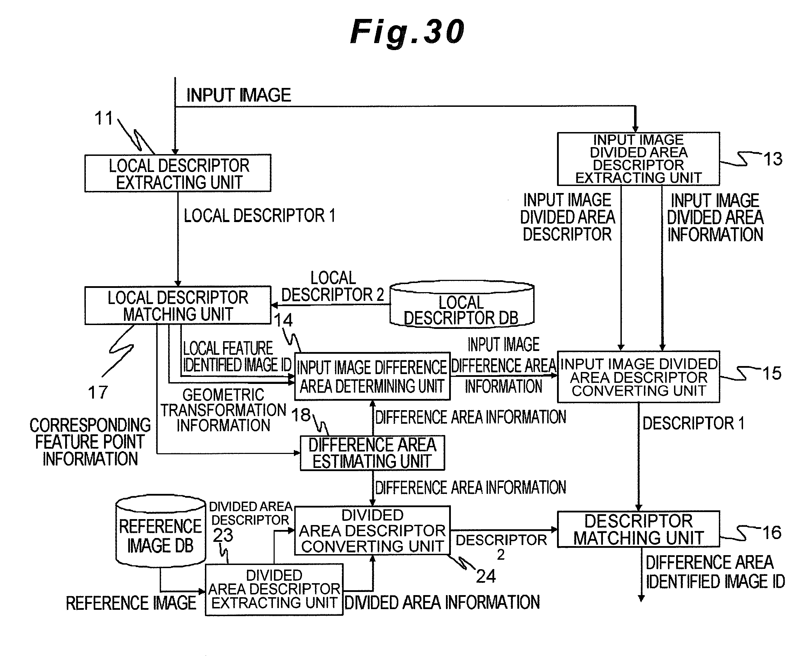

FIG. 30 is a block diagram showing a configuration example of an object identification apparatus according to the sixth embodiment of the present invention. As shown in FIG. 30, the object identification apparatus according to the sixth embodiment includes a local descriptor extracting unit 11, a local descriptor matching unit 17, an input image divided area descriptor extracting unit 13, an input image difference area determining unit 14, an input image divided area descriptor converting unit 15, a descriptor matching unit 16, a difference area estimating unit 18, a divided area descriptor extracting unit 23, and a divided area descriptor converting unit 24.

As described above, the object identification apparatus according to the sixth embodiment differs from the object identification apparatus according to the second embodiment in that the difference area descriptor extracting unit 19 has been changed to the divided area descriptor extracting unit 23 and the divided area descriptor converting unit 24. Details of the divided area descriptor extracting unit 23 and the divided area descriptor converting unit 24 will be described later. Since other components are similar to those of the second embodiment, the components will be denoted by same reference symbols as the second embodiment and a detailed description thereof will be omitted.

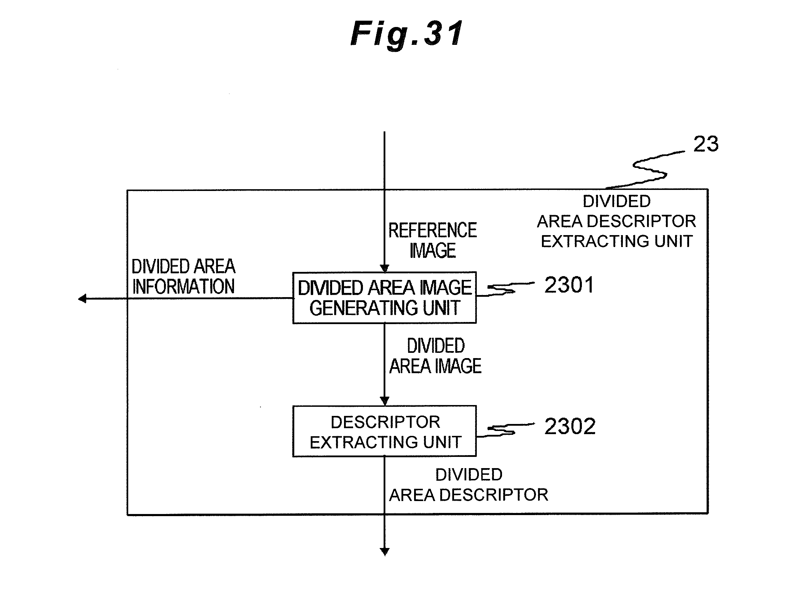

FIG. 31 is a block diagram representing a configuration example of the divided area descriptor extracting unit 23. As shown in FIG. 31, the divided area descriptor extracting unit 23 includes a divided area image generating unit 2301 and a descriptor extracting unit 2302.

The divided area image generating unit 2301 is substantially the same as the divided area image generating unit 301 that is a component of the input image divided area descriptor extracting unit 13 shown in FIG. 5. The divided area image generating unit 2301 differs from the divided area image generating unit 301 in that the divided area image generating unit 2301 receives a reference image instead of an input image and outputs divided area information instead of input image divided area information.

In a similar manner, the descriptor extracting unit 2302 is substantially the same as the descriptor extracting unit 302 that is a component of the input image divided area descriptor extracting unit 13 shown in FIG. 5. The descriptor extracting unit 2302 differs from the descriptor extracting unit 302 in that the descriptor extracting unit 2302 outputs a divided area descriptor instead of an input image divided area descriptor.

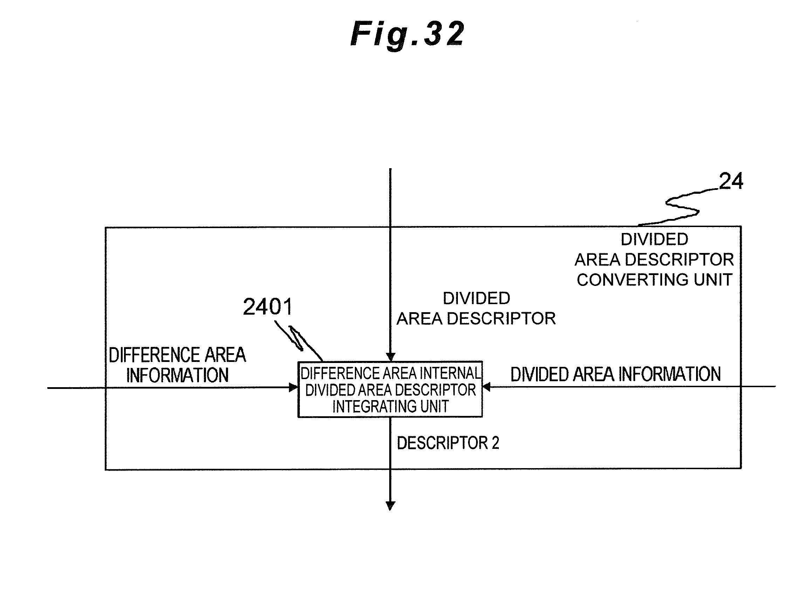

FIG. 32 is a block diagram representing a configuration example of the divided area descriptor converting unit 24. As shown in FIG. 32, the divided area descriptor converting unit 24 includes a difference area internal divided area descriptor integrating unit 2401.

The difference area internal divided area descriptor integrating unit 2401 is substantially the same as the difference area internal divided area descriptor integrating unit 501 that is a component of the input image divided area descriptor converting unit 15 shown in FIG. 7. The difference area internal divided area descriptor integrating unit 2401 differs from the difference area internal divided area descriptor integrating unit 501 in that the difference area internal divided area descriptor integrating unit 2401 receives difference area information instead of input image difference area information, receives a divided area descriptor instead of an input image divided area descriptor, and receives divided area information instead of input image divided area information. In other words, in the divided area descriptor extracting unit 23 and the divided area descriptor converting unit 24 shown in FIGS. 31 and 32, a descriptor 2 that is a descriptor in a difference area of a reference image is generated by dividing the reference image and integrating descriptors extracted from divided area images included in a difference area in a similar manner to the division of an input image described earlier.

In the present embodiment, instead of directly extracting the descriptor 2 from an area in a reference image that is indicated by difference area information as in the first to fifth embodiments, a value of the descriptor 2 is decided by first dividing an image and extracting a descriptor from each divided area in advance and then integrating descriptors of divided areas included in a difference area. By extracting the descriptor 1 representing a descriptor in a difference area of an input image and the descriptor 2 representing a descriptor in a difference area of a reference image under same conditions, descriptor matching with greater accuracy can be achieved.

Moreover, while the configuration shown FIG. 30 as a configuration example of the present embodiment is a configuration based on the second embodiment, a configuration respectively based on the third to fifth embodiments can be similarly adopted. In other words, a configuration can be adopted by replacing a difference area descriptor extracting unit with the divided area descriptor extracting unit 23 and the divided area descriptor converting unit 24 in the configuration examples according to the third to fifth embodiments. Even with the first embodiment, when the descriptor 2 is to be extracted on the fly from a reference image instead of extracting the descriptor 2 from a plurality of reference images and storing the descriptors 2 in a database in advance as shown in FIG. 1, a configuration including the divided area descriptor extracting unit 23 and the divided area descriptor converting unit 24 can be adopted.

In addition, when configuring the present embodiment as a server-client system via a network, an input image need not be directly transmitted to the server and transmitting only a local descriptor, a divided area descriptor, and divided area information which are lighter in weight than the input image may suffice in a similar manner to the first to fifth embodiments. Therefore, with the present embodiment, compared to a configuration in which a client does not perform any processes and simply transmits an image to a server, an amount of time required by the server to perform an identification process and the client to obtain a result of the identification can be reduced.

### Seventh Embodiment

A seventh embodiment of the present invention will be described with reference to the drawings.

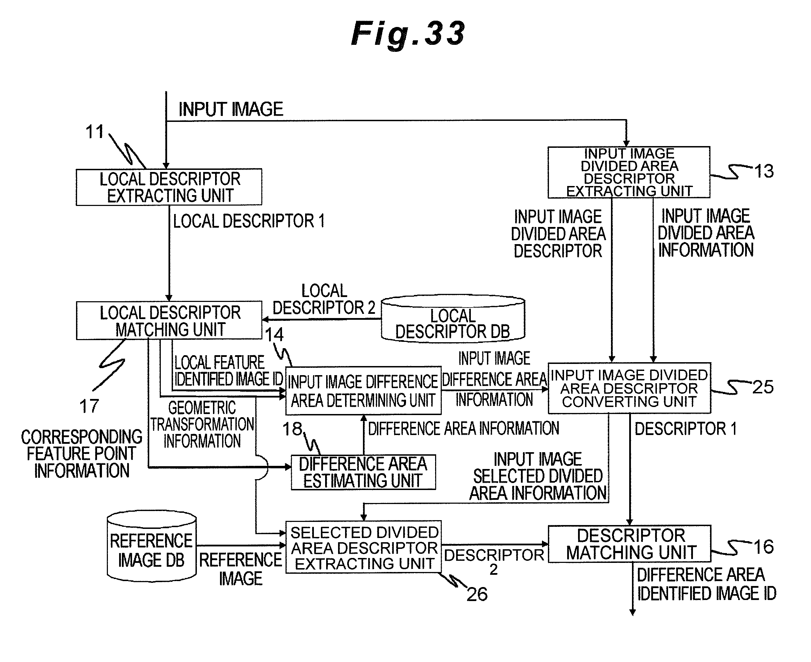

FIG. 33 is a block diagram showing a configuration example of an object identification apparatus according to the seventh embodiment of the present invention. As shown in FIG. 33, the object identification apparatus according to the seventh embodiment includes a local descriptor extracting unit 11, a local descriptor matching unit 17, an input image divided area descriptor extracting unit 13, an input image difference area determining unit 14, an input image divided area descriptor converting unit 25, a descriptor matching unit 16, a difference area estimating unit 18, and a selected divided area descriptor extracting unit 26.

As described above, the object identification apparatus according to the seventh embodiment differs from the object identification apparatus according to the second embodiment in that the input image divided area descriptor converting unit 15 and the difference area descriptor extracting unit 19 have been changed to the input image divided area descriptor converting unit 25 and the selected divided area descriptor extracting unit 26. Details of the input image divided area descriptor converting unit 25 and the selected divided area descriptor extracting unit 26 will be described later. Since other components are similar to those of the second embodiment, the components will be denoted by same reference symbols and a detailed description thereof will be omitted.

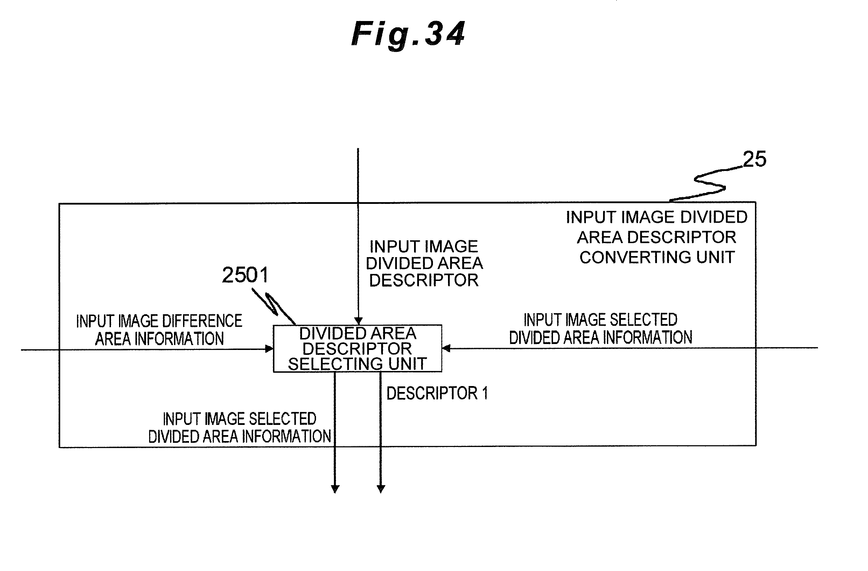

FIG. 34 is a block diagram representing a configuration example of the input image divided area descriptor converting unit 25. As shown in FIG. 34, the input image divided area descriptor converting unit 25 includes a divided area descriptor selecting unit 2501.

The divided area descriptor selecting unit 2501 is similar to the difference area internal divided area descriptor integrating unit 501 that is a component of the input image divided area descriptor converting unit 15 shown in FIG. 7. The divided area descriptor selecting unit 2501 differs from the difference area internal divided area descriptor integrating unit 501 in that the divided area descriptor selecting unit 2501 outputs input image selected divided area information in addition to the descriptor 1. The divided area descriptor selecting unit 2501 outputs information regarding a divided area that completely fits into a difference area of an input image as input image selected divided area information and, at the same time, selects only a descriptor of a divided area that completely fits into a difference area of the input image among input image divided area descriptors and outputs the descriptor as the descriptor 1. The input image selected divided area information is information including coordinate information of four corners and an area ID of a divided area that completely fits into the difference area of the input image.

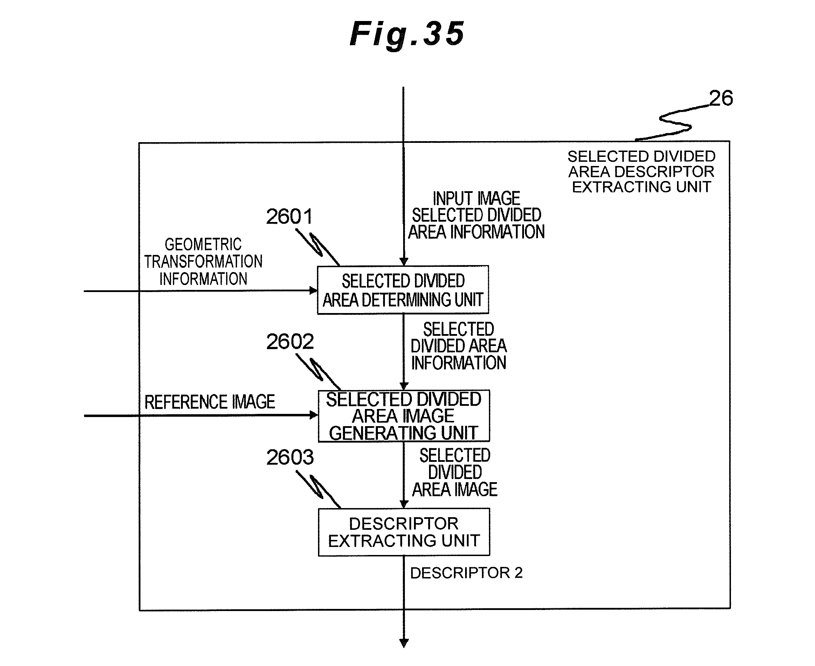

FIG. 35 is a block diagram representing a configuration example of the selected divided area descriptor extracting unit 26. As shown in FIG. 35, the selected divided area descriptor extracting unit 26 includes a selected divided area determining unit 2601, a selected divided area image generating unit 2602, and a descriptor extracting unit 2603.

The selected divided area determining unit 2601 performs a geometric transformation indicated by the geometric transformation information received from the local descriptor matching unit 17 on input image selected divided area information received from the input image divided area descriptor converting unit 25 and outputs selected divided area information indicating information on an area corresponding to an input image selected divided area in the reference image. However, the geometric transformation information used at this point must be information for converting coordinates in the input image to coordinates in the reference image.

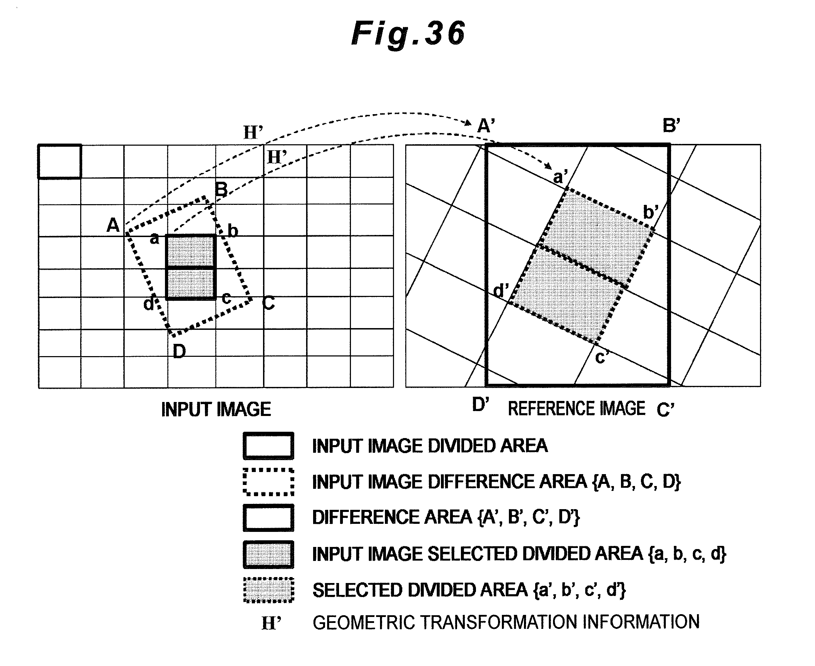

FIG. 36 is a diagram showing relationships of an input image selected divided area in an input image and a selected divided area in a reference image. As shown in FIG. 36, the selected divided area determining unit 2601 performs a geometric transformation indicated by the geometric transformation information on coordinate values of four corners of a divided area that completely fits into a difference area of the input image indicated by the input image selected divided area information received from the input image divided area descriptor converting unit 25 and determines an area to be an object of descriptor extraction among the reference image as a selected divided area.

The selected divided area image generating unit 2602 is similar to the difference area image generating unit that is a component of the difference area descriptor extracting unit 19 shown in FIG. 20. The selected divided area image generating unit 2602 differs in that selected divided area information is inputted instead of difference area information and a selected divided area image is outputted instead of a difference area image.

The descriptor extracting unit 2603 is similar to the difference area descriptor calculating unit 902 that is a component of the difference area descriptor extracting unit 19 shown in FIG. 20. The descriptor extracting unit 2603 differs in that a selected divided area image is inputted instead of a difference area image. In a similar manner to the difference area descriptor calculating unit 902, the descriptor extracted by the descriptor extracting unit 2603 must be a descriptor extracted by a same process as the descriptor extracting unit 302 that is a component of the input image divided area descriptor extracting unit 13 shown in FIG. 5.

In the present embodiment, instead of extracting the descriptor 2 in a difference area of a reference image independently of an input image as in the first to fifth embodiments, information regarding a divided area used as a basis when generating the descriptor 1 is converted by geometric transformation information, an area for which a descriptor is to be generated in the reference image is determined, and the descriptor 2 is generated from the determined area. By performing such a process, since descriptors respectively extracted from corresponding divided areas can be compared after correcting differences in orientations and sizes between objects shown in the input image and the reference image, more accurate descriptor matching can be realized. Moreover, while FIG. 33 described heretofore in an orderly manner as a configuration example of the present embodiment is a configuration based on the second embodiment, a configuration respectively based on the third to fifth embodiments can be similarly adopted. In other words, in the configuration examples of the third to fifth embodiments, a configuration can be adopted by changing the difference area descriptor extracting unit to the selected divided area descriptor extracting unit, causing the input image divided area descriptor converting unit to output selected divided area information, and inputting the selected divided area information to the selected divided area descriptor extracting unit. Even with the first embodiment, when the descriptor 2 is to be extracted on the fly from a reference image instead of extracting the descriptor 2 from a plurality of reference images and storing the descriptors 2 in a database in advance as shown in FIG. 1, a configuration including the input image divided area descriptor converting unit 25 and the selected divided area descriptor extracting unit 26 can be adopted.

In addition, when configuring the present embodiment as a server-client system via a network, an input image need not be directly transmitted to the server and transmitting only a local descriptor, a divided area descriptor, and divided area information which are lighter in weight than the input image may suffice in a similar manner to the first to sixth embodiments. Therefore, with the present embodiment, compared to a configuration in which a client does not perform any processes and simply transmits an image to a server, an amount of time required by the server to perform an identification process and the client to obtain a result of the identification can be reduced.

### Eighth Embodiment

An eighth embodiment of the present invention will be described with reference to the drawings.

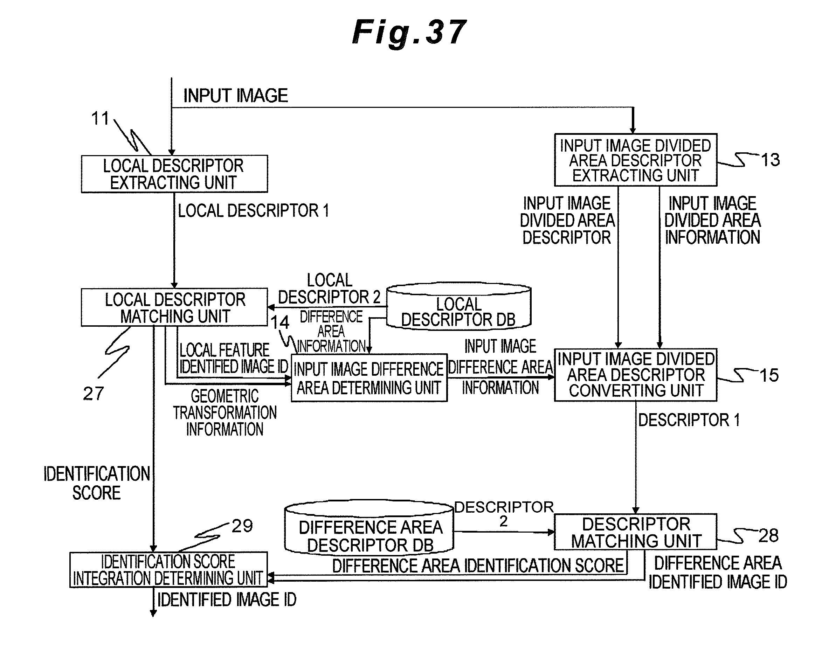

FIG. 37 is a block diagram showing a configuration example of an object identification apparatus according to the eighth embodiment of the present invention. As shown in FIG. 37, the object identification apparatus according to the eighth embodiment includes a local descriptor extracting unit 11, a local descriptor matching unit 27, an input image divided area descriptor extracting unit 13, an input image difference area determining unit 14, an input image divided area descriptor converting unit 15, a descriptor matching unit 28, and an identification score integration determining unit 29.

As described above, the object identification apparatus according to the eighth embodiment differs from the first embodiment in that the local descriptor matching unit 12 and the descriptor matching unit 16 of the object identification apparatus according to the first embodiment have been changed to the local descriptor matching unit 27 and the descriptor matching unit 28 and that the identification score integration determining unit 29 has been added as a new component. Details of the local descriptor matching unit 27, the descriptor matching unit 28, and the identification score integration determining unit 29 will be described later. Since other components are similar to those of the first embodiment, the components will be denoted by same reference symbols and a detailed description thereof will be omitted.

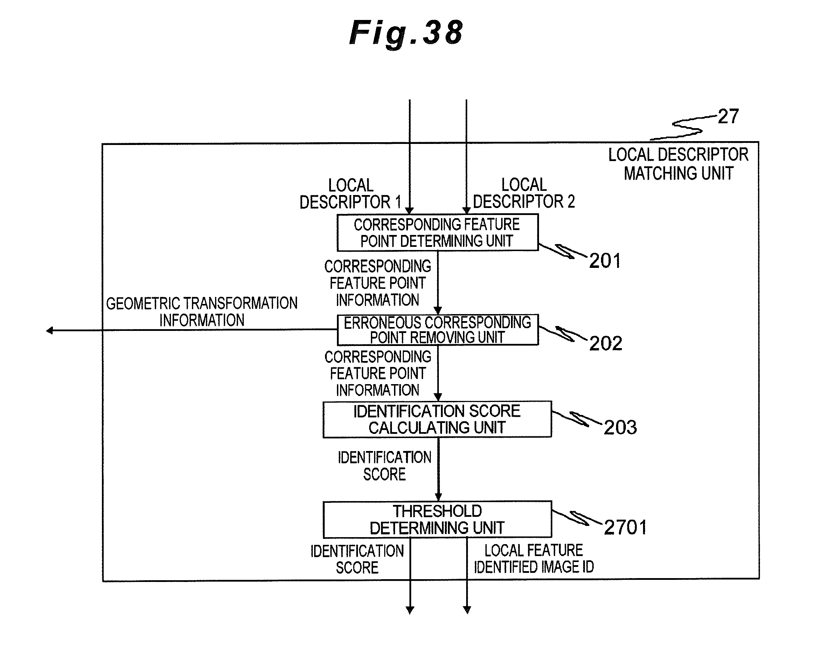

FIG. 38 is a block diagram representing a configuration example of the local descriptor matching unit 27. As shown in FIG. 38, the local descriptor matching unit 27 includes a corresponding feature point determining unit 201, an erroneous corresponding point removing unit 202, an identification score calculating unit 203, and a threshold determining unit 2701.

The corresponding feature point determining unit 201, the erroneous corresponding point removing unit 202, and the identification score calculating unit 203 shown in FIG. 38 are the same as the corresponding feature point determining unit 201, the erroneous corresponding point removing unit 202, and the identification score calculating unit 203 that are components of the local descriptor matching unit 12 shown in FIG. 4 and a detailed description thereof will be omitted.

The threshold determining unit 2701 shown in FIG. 38 is substantially the same as the threshold determining unit 204 that is a component of the local descriptor matching unit 12 shown in FIG. 4 but differs in that the threshold determining unit 2701 outputs not only a local feature identified image ID but also an identification score with a local feature extracted from a reference image corresponding to the local feature identified image ID (or a reference image group associated with the local feature identified image ID). A threshold set by the threshold determining unit 2701 may be set laxer than the threshold set by the threshold determining unit 204 so that a large number of local feature identified image IDs and identification scores are outputted.

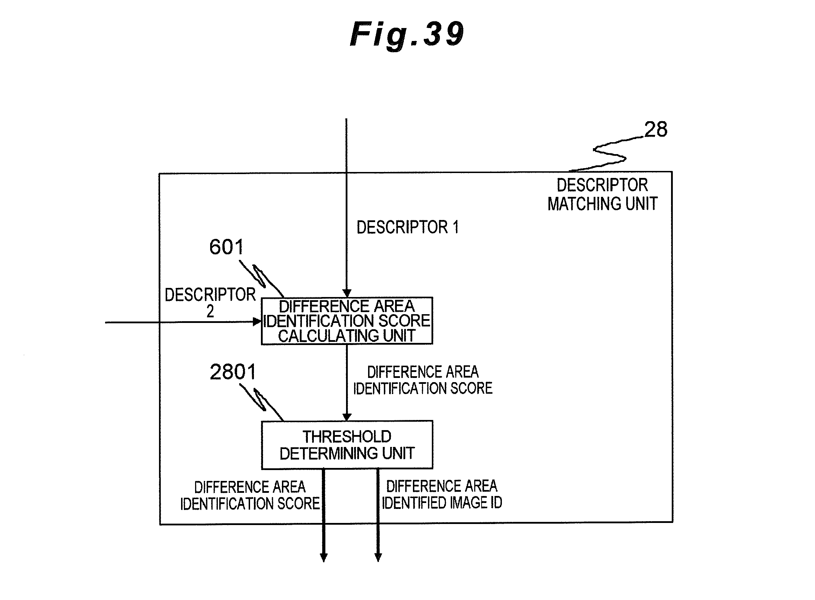

FIG. 39 is a block diagram representing a configuration example of the descriptor matching unit 28. As shown in FIG. 39, the descriptor matching unit 28 includes a difference area identification score calculating unit 601 and a threshold determining unit 2801. The difference area identification score calculating unit 601 shown in FIG. 39 is the same as the difference area identification score calculating unit 601 that is a component of the descriptor matching unit 16 shown in FIG. 8 and a detailed description thereof will be omitted.

The threshold determining unit 2801 shown in FIG. 39 is substantially the same as the threshold determining unit 602 that is a component of the descriptor matching unit 16 shown in FIG. 8 but differs in that the threshold determining unit 2801 outputs not only a difference area identified image ID but also a difference area identification score with a local feature extracted from a difference area of a reference image corresponding to the difference area identified image ID or a reference image group associated with the difference area identified image ID. A threshold set by the threshold determining unit 2801 may be set laxer than the threshold set by the threshold determining unit 602 so that a large number of difference area identified image IDs and difference area identification scores are outputted.

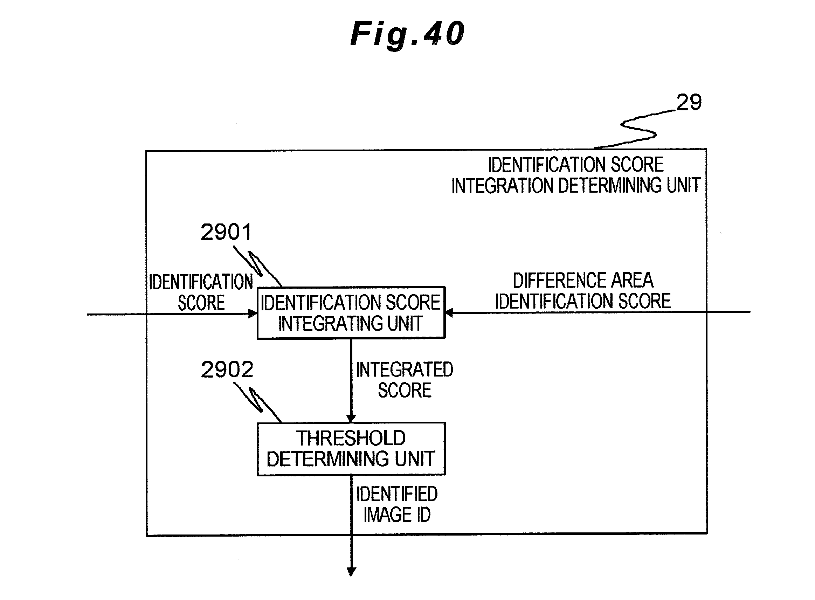

FIG. 40 is a block diagram representing a configuration example of the identification score integration determining unit 29. As shown in FIG. 40, the identification score integration determining unit 29 includes an identification score integrating unit 2901 and a threshold determining unit 2902.

The identification score integrating unit 2901 receives an identification score outputted from the local descriptor matching unit 27 and a difference area identification score outputted from the descriptor matching unit 28 and calculates and outputs an integrated score based on the received scores. At this point, for example, a product of an identification score and a difference area identification score corresponding to a same image ID may be calculated and a value thereof may be outputted as an integrated score.

The threshold determining unit 2902 shown in FIG. 40 is substantially the same as the threshold determining unit 204 that is a component of the local descriptor matching unit 12 shown in FIG. 4 or the threshold determining unit 602 that is a component of the local descriptor matching unit 16 shown in FIG. 8. The threshold determining unit 2902 differs from the threshold determining unit 204 and the threshold determining unit 602 in that the threshold determining unit 2902 compares the integrated score outputted from the identification score integrating unit 2901 with a prescribed threshold, determines that the input image and the reference image are images that share a same object as subjects when the integrated score is equal to or higher than the threshold and outputs an image ID of the input image as an identified image ID, and determines that the input image and the reference image are not images that share a same object as subjects when the integrated score is lower than the threshold. In other words, the threshold determining unit 2902 determines whether or not the input image and the reference image are images that share a same object as subjects based on a result of matching by the local descriptor matching unit 27 and a result of matching by the descriptor matching unit 28.

Unlike the first to seventh embodiments, in the present embodiment, a final identification result is not determined solely based on a difference area identification score but is determined based on a score that integrates the difference area identification score with an identification score from a local descriptor. When images showing a same object are photographed in an adverse environment (for example, a dark environment) and other similar objects are photographed in an ideal environment, if the similar objects are similar not only in texture but also in color, a correct identification cannot be performed by only using a descriptor extracted from a difference area. However, by combining with a result of an identification based on a local descriptor, an identification result with respect to a same object can be relatively improved. Moreover, while FIG. 37 described heretofore in an orderly manner as a configuration example of the present embodiment is a configuration based on the first embodiment, a configuration respectively based on the second to seventh embodiments can be similarly adopted. In other words, in the configuration examples of the second to seventh embodiments, configurations can be adopted in which an identification score is outputted from a local descriptor matching unit, a difference area identification score is outputted from a descriptor matching unit, and both the identification score and the difference area identification score are inputted to an identification score integration determining unit.

In addition, when configuring the present embodiment as a server-client system via a network, an input image need not be directly transmitted to the server and transmitting only a local descriptor, a divided area descriptor, and divided area information which are lighter in weight than the input image may suffice in a similar manner to the first to seventh embodiments. Therefore, with the present embodiment, compared to a configuration in which a client does not perform any processes and simply transmits an image to a server, an amount of time required by the server to perform an identification process and the client to obtain a result of the identification can be reduced.

The present application claims priority on the basis of Japanese Patent Application No. 2012-184536 filed on August 23, 2012, the entire contents of which are incorporated herein by reference.

While the present invention has been described with reference to embodiments, the present invention is not intended to be limited to the embodiments described above. Various modifications to configurations and details of the present invention will occur to those skilled in the art without departing from the scope of the present invention.

A part of or all of the embodiments above may also be described as, but not limited to, the appendices provided below.

### Appendix 1

An object identification apparatus including:
a local descriptor matching unit for determining whether or not respective descriptors of feature points extracted from an input image and respective descriptors of feature points extracted from a reference image correctly correspond to each other;
an input image divided area descriptor extracting unit for extracting a descriptor from each divided area obtained by dividing the input image;
an input image divided area descriptor converting unit for acquiring a descriptor of the divided area included in an area in the input image corresponding to a position of an image area obtained by performing a geometric transformation for correcting a geometric deviation between the input image and the reference image on a prescribed area of the reference image when a score based on the number of combinations of descriptors determined to correspond correctly by the local descriptor matching unit is equal to or larger than a prescribed value; and
a descriptor matching unit for matching a descriptor acquired by the input image divided area descriptor converting unit with a descriptor extracted from the prescribed area of the reference image, and for outputting a matching result.

### Appendix 2

The object identification apparatus according to Appendix 1, further including a storage unit for storing information regarding the prescribed area of the reference image.

### Appendix 3

The object identification apparatus according to Appendix 1, wherein the prescribed area of the reference image is an area including a feature point in the reference image, to which a descriptor is determined to correspond erroneously by the local descriptor matching unit.

### Appendix 4

The object identification apparatus according to Appendix 1, wherein the prescribed area of the reference image is an area including a feature point in the reference image, to which a descriptor is determined to correspond erroneously by the local descriptor matching unit, in an area showing an object.

### Appendix 5

The object identification apparatus according to Appendix 1, wherein the prescribed area of the reference image is an area including an area whose degree of similarity with a prescribed pattern image is equal to or greater than a prescribed value in the reference image.

### Appendix 6

The object identification apparatus according to Appendix 1, wherein the prescribed area of the reference image is an area which includes an area, to which a descriptor is determined to correspond erroneously by the local descriptor matching unit and whose degree of similarity with a prescribed pattern image is equal to or greater than a prescribed value in the reference image.

### Appendix 7

The object identification apparatus according to any one of Appendices 1 to 6, further including:
a divided area descriptor extracting unit for extracting a descriptor from each divided area obtained by dividing the reference image; and
a divided area descriptor converting unit for acquiring a descriptor of the divided area included in a prescribed area of the reference image, wherein
a descriptor extracted from the prescribed area of the reference image used in a matching by the descriptor matching unit is a descriptor acquired by the divided area descriptor converting unit.

### Appendix 8

The object identification apparatus according to any one of Appendices 3 to 6, further including
a selected divided area descriptor extracting unit for extracting a descriptor of an area of the reference image corresponding to the divided area of the input image from which a descriptor has been acquired by the input image divided area descriptor converting unit, wherein
a descriptor extracted from the prescribed area of the reference image used in a matching by the descriptor matching unit is a descriptor extracted by the selected divided area descriptor extracting unit.

### Appendix 9

The object identification apparatus according to any one of Appendices 1 to 8, further including an integration determining unit for determining whether or not the input image and the reference image are images sharing a same object as subjects based on a result of the determination by the local descriptor matching unit and a result of the matching by the descriptor matching unit.

### Appendix 10

An object identification method including the steps of:
determining whether or not respective descriptors of feature points extracted from an input image and respective descriptors of feature points extracted from a reference image correctly correspond to each other;
extracting a descriptor from each divided area obtained by dividing the input image;
acquiring a descriptor of the divided area included in an area in the input image corresponding to a position of an image area obtained by performing a geometric transformation for correcting a geometric deviation between the input image and the reference image on a prescribed area of the reference image when a score based on the number of combinations of descriptors determined to correspond correctly in the determining step is equal to or larger than a prescribed value; and
matching a descriptor acquired in the acquiring step with a descriptor extracted from the prescribed area of the reference image and outputting a matching result.

### Appendix 11

A program causing a computer to function as:
a local descriptor matching unit for determining whether or not respective descriptors of feature points extracted from an input image and respective descriptors of feature points extracted from a reference image correctly correspond to each other;
an input image divided area descriptor extracting unit for extracting a descriptor from each divided area obtained by dividing the input image;
an input image divided area descriptor converting unit for acquiring a descriptor of the divided area included in an area in the input image corresponding to a position of an image area obtained by performing a geometric transformation for correcting a geometric deviation between the input image and the reference image on a prescribed area of the reference image when a score based on the number of combinations of descriptors determined to correspond correctly by the local descriptor matching unit is equal to or larger than a prescribed value; and
a descriptor matching unit for matching a descriptor acquired by the input image difference area descriptor converting unit with a descriptor extracted from the prescribed area of the reference image, and for outputting a matching result.

With conventional object identification that only uses a local descriptor, it is difficult to accurately identify products which belong to a same brand and which only differ from each other in colors of packages or a part of characters and accurately identify mail which share a same envelope and only differ from one another in addresses. However, according to the present invention, fine differences that cannot be identified by conventional matching using only a local descriptor can now be distinguished and images showing a same object can be exclusively identified. Accordingly, the present invention can be applied to a barcode-less POS system, an article inspection system, an automatic mail sorting system, and the like.

- 11: local descriptor extracting unit
- 12: local descriptor matching unit
- 13: input image divided area descriptor extracting unit
- 14: input image difference area determining unit
- 15: input image divided area descriptor converting unit
- 16: descriptor matching unit
- 17: local descriptor matching unit
- 18: difference area estimating unit
- 19: difference area descriptor extracting unit
- 20, 21, 22: difference area estimating unit
- 23: divided area descriptor extracting unit
- 24: divided area descriptor converting unit
- 25: input image divided area descriptor converting unit
- 26: selected divided area descriptor extracting unit
- 27: local descriptor matching unit
- 28: descriptor matching unit
- 29: identification score integration determining unit
- 101: brightness information extracting unit
- 102: local feature point detecting unit
- 103: local descriptor generating unit
- 201: corresponding feature point determining unit
- 202: erroneous corresponding point removing unit
- 203: identification score calculating unit
- 204: threshold determining unit
- 301: divided area image generating unit
- 302: descriptor extracting unit
- 501: difference area internal divided area descriptor integrating unit
- 601: difference area identification score calculating unit
- 602: threshold determining unit
- 801: erroneously-corresponding feature point concentration searching unit
- 901: difference area image generating unit
- 902: difference area descriptor calculating unit
- 2001: object area estimating unit
- 2002: erroneously-corresponding feature point concentration searching unit
- 2101, 2102: template matching unit
- 2201: erroneously-corresponding feature point concentration searching unit
- 2202, 2203: template matching unit
- 2204: erroneously-corresponding feature point concentration searching unit
- 2205: difference candidate area overlap detecting unit
- 2301: divided area image generating unit
- 2302: descriptor extracting unit
- 2401: difference area internal divided area descriptor integrating unit
- 2501: divided area descriptor selecting unit
- 2601: selected divided area determining unit
- 2602: selected divided area image generating unit
- 2603: descriptor extracting unit
- 2701, 2801: threshold determining unit
- 2901: identification score integrating unit
- 2902: threshold determining unit

## Claims

1. An object identification apparatus comprising:
a local descriptor matching unit for determining whether or not respective descriptors of feature points extracted from an input image and respective descriptors of feature points extracted from a reference image correctly correspond to each other;
an input image divided area descriptor extracting unit for extracting a descriptor from each divided area obtained by dividing the input image;
an input image divided area descriptor converting unit for acquiring a descriptor of the divided area included in an area in the input image corresponding to a position of an image area obtained by performing a geometric transformation for correcting a geometric deviation between the input image and the reference image on a prescribed area of the reference image when a score based on the number of combinations of descriptors determined to correspond correctly by the local descriptor matching unit is equal to or larger than a prescribed value; and
a descriptor matching unit for matching a descriptor acquired by the input image divided area descriptor converting unit with a descriptor extracted from the prescribed area of the reference image, and for outputting a matching result.

2. The object identification apparatus according to claim 1, further comprising a storage unit for storing information regarding the prescribed area of the reference image.

3. The object identification apparatus according to claim 1, wherein the prescribed area of the reference image is an area including a feature point in the reference image, to which a descriptor is determined to correspond erroneously by the local descriptor matching unit.

4. The object identification apparatus according to claim 1, wherein the prescribed area of the reference image is an area including a feature point in the reference image, to which a descriptor is determined to correspond erroneously by the local descriptor matching unit, in an area showing an object.

5. The object identification apparatus according to claim 1, wherein the prescribed area of the reference image is an area including an area whose degree of similarity with a prescribed pattern image is equal to or greater than a prescribed value in the reference image.

6. The object identification apparatus according to claim 1, wherein the prescribed area of the reference image is an area which includes an area where the local descriptor matching unit determines that a descriptor corresponds erroneously and a degree of similarity with a prescribed pattern image is equal to or greater than a prescribed value in the reference image.

7. The object identification apparatus according to any one of claims 1 to 6, further comprising:
a divided area descriptor extracting unit for extracting a descriptor from each divided area obtained by dividing the reference image; and
a divided area descriptor converting unit for acquiring a descriptor of the divided area included in a prescribed area of the reference image, wherein
a descriptor extracted from the prescribed area of the reference image used in a matching by the descriptor matching unit is a descriptor acquired by the divided area descriptor converting unit.

8. The object identification apparatus according to any one of claims 3 to 6, further comprising
a selected divided area descriptor extracting unit for extracting a descriptor of an area of the reference image corresponding to the divided area of the input image from which a descriptor has been acquired by the input image divided area descriptor converting unit, wherein
a descriptor extracted from the prescribed area of the reference image used in a matching by the descriptor matching unit is a descriptor extracted by the selected divided area descriptor extracting unit.

9. An object identification method comprising the steps of:
determining whether or not respective descriptors of feature points extracted from an input image and respective descriptors of feature points extracted from a reference image correctly correspond to each other;
extracting a descriptor from each divided area obtained by dividing the input image;
acquiring a descriptor of the divided area included in an area in the input image corresponding to a position of an image area obtained by performing a geometric transformation for correcting a geometric deviation between the input image and the reference image on a prescribed area of the reference image when a score based on the number of combinations of descriptors determined to correspond correctly in the determining step is equal to or larger than a prescribed value; and
matching a descriptor acquired in the acquiring step with a descriptor extracted from the prescribed area of the reference image and outputting a matching result.

10. A program causing a computer to function as:
a local descriptor matching unit for determining whether or not respective descriptors of feature points extracted from an input image and respective descriptors of feature points extracted from a reference image correctly correspond to each other;
an input image divided area descriptor extracting unit for extracting a descriptor from each divided area obtained by dividing the input image;
an input image divided area descriptor converting unit for acquiring a descriptor of the divided area included in an area in the input image corresponding to a position of an image area obtained by performing a geometric transformation for correcting a geometric deviation between the input image and the reference image on a prescribed area of the reference image when a score based on the number of combinations of descriptors determined to correspond correctly by the local descriptor matching unit is equal to or larger than a prescribed value; and
a descriptor matching unit for matching a descriptor acquired by the input image difference area descriptor converting unit with a descriptor extracted from the prescribed area of the reference image, and for outputting a matching result.
